# EUROPEAN PATENT APPLICATION

(11) **EP 4 083 709 A1**
(43) Date of publication of application: **02.11.2022**
(21) Application number: 20904725.7
(22) Date of filing: 25.12.2020
(51) Int. Cl.: G03G 9/08, G03G 9/087

(54) **BINDER RESIN FOR TONERS**

(30) Priority: 27.12.2019 JP 2019239851
(71) Applicant: Kao Corporation, Chuo-ku Tokyo 103-8210 (JP)
(72) Inventor: WAKABAYASHI, Yuki, Wakayama-shi, Wakayama 640-8580 (JP)
(74) Representative: Vossius & Partner Patentanwälte Rechtsanwälte mbB
(86) International application number: PCT/JP2020/049020
(87) International publication number: WO 2021/132684

(57) **Abstract**

The present invention relates to a binder resin for toners which contains a composite resin that is formed by bonding a styrene-acrylic resin unit and a polyester-based resin unit to each other through a covalent bond, in which an acid value of a styrene-acrylic resin (A) constituting the styrene-acrylic resin unit is not less than 40 mgKOH/g.

## Description

### FIELD OF THE INVENTION

The present invention relates to a binder resin for toners that are used for developing latent images formed in electrophotography, electrostatic recording method, electrostatic printing method, etc.

### BACKGROUND OF THE INVENTION

In recent years, in the field of electrophotography, with the progress of electrophotographic systems, it has been required to develop toners for development of electrostatic images which are adaptable for high image quality and high copying or printing speed. To meet such requirements, it has been recommended to use a polyester resin as a binder resin for toners which is excellent in low-temperature fusing properties.

In general, a minimum fusing temperature of the toners lies in the temperature range between a low-temperature offset occurrence temperature and a high-temperature offset occurrence temperature. Therefore, the temperature range where the binder resin is usable lies within the range from the minimum fusing temperature to the high-temperature offset occurrence temperature. In consequence, if the minimum fusing temperature is lowered as low as possible, and the high-temperature offset occurrence temperature is raised as high as possible, the usable fusing temperature can be decreased, and the usable temperature range can be expanded, so that it is possible to satisfy the requirements, such as saving of energy and high-speed fusion of the toners. For this reason, there is a high demand for a binder resin for toners as well as a toner which are excellent in both of low-temperature fusing properties and anti-offset properties.

However, there has been present such a problem that the polyester resin tends to readily suffer from offset phenomenon despite excellent low-temperature fusing properties thereof.

In the circumstances, JP 2008-102396A (Patent Literature 1) discloses a toner containing toner particles whose binder resin contains a low-softening point resin that is obtained by subjecting a vinyl-based monomer to addition polymerization reaction in the presence of a polycondensable monomer, and after completion of the addition polymerization reaction, subjecting the polycondensable monomer to polycondensation reaction, or that is obtained by subjecting the polycondensable monomer to polycondensation reaction in the presence of a vinyl-based resin obtained by subjecting the vinyl-based monomer to addition polymerization reaction, and a high-softening point resin that is obtained by adding a vinyl-based monomer to a polycondensation resin obtained by subjecting a polycondensable monomer to polycondensation reaction, followed by mixing these components with each other to subject the resulting mixture to addition polymerization reaction, in which a softening point of the low-softening point resin is lower by 5° C or more than a softening point of the high-softening point resin, and a mass ratio between the low-softening point resin and the high-softening point resin falls within the predetermined range. In the Patent Literature 1, it is also described that the resulting toner is excellent in low-temperature fusing properties, anti-high temperature offset properties and developability.

JP 2018-10124A (Patent Literature 2) discloses a toner that contains toner particles formed of a binder resin and a colorant, in which by using, as the binder resin, a hybrid resin that is obtained by chemically bonding a polyester unit and a vinyl-based polymer unit that is obtained by polymerizing a vinyl-based monomer in the absence of the polyester unit and a raw material thereof, to each other, it is possible to obtain the toner that is excellent in low-temperature fusing properties, storage properties and ability of controlling fusion of the toner onto a photosensitive drum.

### SUMMARY OF THE INVENTION

The present invention relates to a binder resin for toners which contains a composite resin that is formed by bonding a styrene-acrylic resin unit and a polyester-based resin unit to each other through a covalent bond, in which:
an acid value of a styrene-acrylic resin (A) constituting the styrene-acrylic resin unit is not less than 40 mgKOH/g.

### DETAILED DESCRIPTION OF THE INVENTION

In the toner described in the Patent Literature 1, there is used the vinyl-based resin obtained by subjecting the vinyl-based monomer to addition polymerization reaction in the presence of the polycondensable monomer or the polycondensation resin. Therefore, the resulting toner tends to pose the problem concerning ability of controlling a molecular weight or a molecular weight distribution of the resin as well as copolymerizability of the monomers.

In addition, in the toner described in the Patent Literature 2, since the vinyl-based polymer constituting the hybrid resin has a low acid value, the resin tends to be insufficient in hybridization thereof, so that the resulting toner tends to pose the problem concerning heat-resistant storage properties, charge stability and the like.

The present invention relates to a binder resin for toners which is excellent in low-temperature fusing properties, anti-hot offset properties, heat-resistant storage properties and charge stability, a toner for development of electrostatic images, and a process for producing the binder resin for toners.

The present inventors have noticed that in a binder resin for toners containing a composite resin (hybrid resin) which is formed by bonding a polyester-based resin unit having excellent low-temperature fusing properties and a styrene-acrylic resin unit having excellent anti-hot offset properties to each other through a covalent bond, by optimizing a molecular weight, a molecular weight distribution and monomer copolymerizability of a styrene-acrylic resin constituting the styrene-acrylic resin unit contained in the composite resin and controlling an acid value of the styrene-acrylic resin to not less than a predetermined value, it is possible to achieve sufficient hybridization (formation of a composite material) of the styrene-acrylic resin unit and the polyester-based resin unit, and as a result, have found that it is possible to provide a binder resin for toners which is excellent in low-temperature fusing properties, anti-hot offset properties, heat-resistant storage properties and charge stability, a toner for development of electrostatic images, and a process for producing the binder resin for toners.

That is, the present invention relates to the following aspects [1] to [3].
[1] A binder resin for toners, containing a composite resin that is formed by bonding a styrene-acrylic resin unit and a polyester-based resin unit to each other through a covalent bond, in which:
   an acid value of a styrene-acrylic resin (A) constituting the styrene-acrylic resin unit is not less than 40 mgKOH/g.
[2] A toner for development of electrostatic images, containing the binder resin for toners according to the above aspect [1].
[3] A process for producing a binder resin for toners which contains a composite resin that is formed by bonding a styrene-acrylic resin unit and a polyester-based resin unit to each other through a covalent bond, said process including:
   Step I: polymerizing a raw monomer material (a) in a polymerization system that is independent of and separate from a polymerization system for a raw monomer material (b) forming a polyester-based resin (B) constituting the polyester-based resin unit, in the absence of the polyester-based resin (B), to obtain a styrene-acrylic resin (A); and
   Step II: bonding the styrene-acrylic resin (A) obtained in the step I and the polyester-based resin (B) to each other through a covalent bond to thereby obtain the binder resin for toners which contains the composite resin,
   in which an acid value of the styrene-acrylic resin (A) is not less than 40 mgKOH/g.

In accordance with the present invention, it is possible to provide a binder resin for toners which is excellent in low-temperature fusing properties, anti-hot offset properties, heat-resistant storage properties and charge stability, a toner for development of electrostatic images, and a process for producing the binder resin for toners.

### [Binder Resin for Toners]

The binder resin for toners according to the present invention (hereinafter also referred to merely as a "binder resin of the present invention") contains a composite resin that is formed by bonding a styrene-acrylic resin unit and a polyester-based resin unit to each other through a covalent bond.

In the binder resin, an acid value of a styrene-acrylic resin (A) constituting the styrene-acrylic resin unit is not less than 40 mgKOH/g.

The toner of the present invention can exhibit good low-temperature fusing properties, anti-hot offset properties, heat-resistant storage properties and charge stability.

The reason why the aforementioned advantageous effects can be attained by the present invention is considered as follows, though it is not clearly determined yet.

That is, the styrene-acrylic resin unit in the composite resin contained in the binder resin of the present invention is constituted of the styrene-acrylic resin that is produced in the absence of a polyester-based resin constituting the polyester-based resin unit or a raw monomer material forming the polyester-based resin. For this reason, it is considered that since the polymerization of the raw monomer material for the styrene-acrylic resin is conducted in such a reaction site as is free from the polyester-based resin or a polycondensable monomer thereof, unlike the conventional arts, the raw monomer material for the styrene-acrylic resin can exhibit a polymerization performance inherent thereto, so that it is possible to form a more homogeneous styrene-acrylic resin unit that is well controlled in its molecular weight, molecular weight distribution and monomer copolymerizability. Furthermore, by controlling the acid value of the styrene-acrylic resin constituting the styrene-acrylic resin unit in the composite resin to not less than 40 mgKOH/g, it is possible to achieve sufficient hybridization of the styrene-acrylic resin and the polyester-based resin constituting the polyester-based resin unit. Also, it is considered that with the synergistic effect of these features, since the molecular motion of the composite resin under a low-temperature condition as well as entanglement between polymer chains of the resin under a high-temperature condition can be readily controlled, it is possible to form a resin that can exhibit a low viscosity under the low-temperature condition and a high elasticity under the high-temperature condition, i.e., a resin that can be prevented from exhibiting not only a high viscosity under the low-temperature condition, but also a low elasticity under the high-temperature condition, so that the resulting toner can be improved in low-temperature fusing properties, anti-hot offset properties, heat-resistant storage properties and charge stability.

The definitions of various terms used in the present specification, etc., are described below.

The "polyester-based resin" as used herein may also include a modified polyester resin that is obtained by modifying a polyester resin to such an extent that the resin undergoes substantially no deterioration in its properties. Examples of the modified polyester resin include a urethane-modified polyester resin obtained by modifying a polyester resin with a urethane bond, and an epoxy-modified polyester resin obtained by modifying a polyester resin with an epoxy bond.

The "bisphenol A" means 2,2-bis(4-hydroxyphenyl)propane.

Examples of the "carboxylic acid compound" include a carboxylic acid, an anhydride of the carboxylic acid and an alkyl ester of the carboxylic acid containing an alkyl group having not less than 1 and not more than 3 carbon atoms. Incidentally, the number of carbon atoms of the alkyl group contained in the alkyl ester is excluded from the number of carbon atoms of the carboxylic acid compound.

The "binder resin" as used herein means a resin component as a binder which includes the composite resin in the toner.

The toner of the present invention contains a colorant and the binder resin.

The toner of the present invention contains, for example, toner particles and an external additive.

The toner particles preferably contain the colorant and the binder resin.

Moreover, the toner particles may also contain, for example, a releasing agent, a colorant derivative, a charge control agent and other additives.

### <Composite Resin>

The composite resin is a resin formed by bonding the styrene-acrylic resin unit and the polyester-based resin unit to each other through a covalent bond.

The acid value of the styrene-acrylic resin (A) constituting the styrene-acrylic resin unit is not less than 40 mgKOH/g from the viewpoint of improving low-temperature fusing properties, anti-hot offset properties, heat-resistant storage properties and charge stability of the resulting toner.

As the method of hybridizing the styrene-acrylic resin unit and the polyester-based resin unit by bonding these resin units to each other through a covalent bond, from the viewpoint of well controlling a molecular weight or a molecular weight distribution of the resin and copolymerizability of the monomers as well as from the viewpoint of improving low-temperature fusing properties, anti-hot offset properties, heat-resistant storage properties and charge stability of the resulting toner, there may be mentioned a method (i) of subjecting the styrene-acrylic resin (A) constituting the styrene-acrylic resin unit and a polyester-based resin (B) constituting the polyester-based resin unit to a polymer reaction, or a method (ii) of reacting the styrene-acrylic resin (A) constituting the styrene-acrylic resin unit and the raw monomer material (b) forming the polyester-based resin unit with each other.

Among these methods, from the viewpoint of well controlling a molecular weight or a molecular weight distribution of the resin and copolymerizability of the monomers as well as from the viewpoint of improving low-temperature fusing properties, anti-hot offset properties, heat-resistant storage properties and charge stability of the resulting toner, preferred is the method (i) using the aforementioned polymer reaction.

In the method (i), since the hybridizing method is accomplished by the polymer reaction, it is preferred that the respective polymerization systems for the styrene-acrylic resin (A) and the polyester-based resin (B) are independent reaction systems in which respective polymerization reactions for these resins are conducted separately from each other. The polymerization system for the styrene-acrylic resin (A) is preferably an addition polymerization reaction system, whereas the polymerization system for the polyester-based resin (B) is preferably a polycondensation reaction system. The independent reaction systems mean that the addition polymerization for the styrene-acrylic resin (A) and the polycondensation for the polyester-based resin (B) are respectively conducted in the separate reaction sites. More specifically, the independent reaction systems mean that the addition polymerization for the styrene-acrylic resin (A) is conducted in the absence of the polyester-based resin (B) and the raw monomer material (b) forming the polyester-based resin (B), whereas the polycondensation for the polyester-based resin (B) is conducted in the absence of the styrene-acrylic resin (A) and the raw monomer material (a) forming the styrene-acrylic resin (A).

It is not required that the aforementioned two polymerization reactions are allowed to proceed and complete at the same time, as long as they are respectively conducted in independent reaction systems. The two polymerization reactions may be allowed to proceed and complete by appropriately selecting a reaction temperature and a reaction time according to the respective reaction mechanisms.

In addition, in the polymer reaction of the method (i), the method of mixing the styrene-acrylic resin (A) and the polyester-based resin (B) is not particularly limited. For example, there may be used the method in which after isolating the polyester-based resin (B), the styrene-acrylic resin (A) is mixed therewith, or the method in which subsequently to production of the polyester-based resin (B), the styrene-acrylic resin (A) is continuously added to and mixed with the reaction solution containing the polyester-based resin (B) without isolating the polyester-based resin (B) therefrom.

### [Styrene-Acrylic Resin (A)]

### (Raw Monomer Material (a))

The styrene-acrylic resin (A) constitutes the styrene-acrylic resin unit of the composite resin from the viewpoint of improving low-temperature fusing properties, anti-hot offset properties, heat-resistant storage properties and charge stability of the resulting toner, and is in the form of an addition polymerization product of the raw monomer material (a) containing a styrene-based compound and a (meth)acrylic monomer.

Examples of the styrene-based compound include styrenes and styrene derivatives, such as styrene, *o*-methyl styrene, *m*-methyl styrene, *p*-methyl styrene, *α*-methyl styrene, *p*-ethyl styrene, 2,4-dimethyl styrene, *p-*chlorostyrene, vinyl naphthalene, etc. Of these styrene-based compounds, preferred are styrene and *α*-methyl styrene.

Examples of the (meth)acrylic monomer include (meth)acrylic acids and (meth)acrylic acid derivatives, such as acrylic acid, methacrylic acid, methyl (meth)acrylate, ethyl (meth)acrylate, *n*-propyl (meth)acrylate, isopropyl (meth)acrylate, *n*-butyl (meth)acrylate, isobutyl (meth)acrylate, *tert-*butyl (meth)acrylate, amyl (meth)acrylate, cyclohexyl (meth)acrylate, *n*-octyl (meth)acrylate, isooctyl (meth)acrylate, decyl (meth)acrylate, lauryl (meth)acrylate, 2-ethylhexyl (meth)acrylate, stearyl (meth)acrylate, methoxyethyl (meth)acrylate, 2-hydroxyethyl (meth)acrylate, glycidyl (meth)acrylate, 2-chloroethyl (meth)acrylate, phenyl (meth)acrylate, 2-(dimethylamino)ethyl (meth)acrylate, 2-(diethylamino)ethyl (meth)acrylate, methyl *α*-chloroacrylate, etc.

Incidentally, the term "(meth)acrylic acid ester" means to include both of an acrylic acid ester and a methacrylic acid ester.

Of these (meth)acrylic monomers, preferred are acrylic acid and methacrylic acid, and more preferred is acrylic acid.

The raw monomer material (a) may also contain the other monomer(s) in addition to the styrene compound and the (meth)acrylic monomer.

Examples of the other monomer(s) include ethylenically unsaturated monoolefins, such as ethylene, propylene, butylene, isobutylene, etc.; diolefins, such as butadiene, etc.; halovinyl compounds, such as vinyl chloride, vinyl bromide, vinyl fluoride, etc.; vinyl esters, such as vinyl acetate, vinyl propionate, vinyl formate, vinyl caproate, etc.; vinyl ethers, such as vinyl methyl ether, etc.; vinylidene halides, such as vinylidene chloride, etc.; *N*-vinyl compounds, such as *N*-vinyl pyrrole, *N*-vinyl pyrrolidone, etc.; and the like.

The raw monomer material (a) preferably contains at least one styrene compound selected from the group consisting of styrene and *α*-methyl styrene, and at least one (meth)acrylic monomer selected from the group consisting of acrylic acid, methacrylic acid, methyl acrylate, butyl acrylate, 2-ethylhexyl acrylate, stearyl acrylate, methyl methacrylate, *n*-butyl methacrylate and 2-hydroxyethyl methacrylate, and may further contain the other monomer(s), such as propylene, etc.

The content of the styrene compound in the raw monomer material (a) forming the styrene-acrylic resin (A), or the content of a constitutional unit derived from the styrene compound in the styrene-acrylic resin (A) constituting the styrene-acrylic resin unit, is preferably not less than 50% by mass, more preferably not less than 60% by mass, even more preferably not less than 70% by mass, further even more preferably not less than 80% by mass, still further even more preferably not less than 85% by mass and furthermore preferably not less than 90% by mass, and is also preferably not more than 98% by mass, more preferably not more than 96% by mass and even more preferably not more than 94% by mass, from the viewpoint of improving low-temperature fusing properties, anti-hot offset properties, heat-resistant storage properties and charge stability of the resulting toner.

The content of the (meth)acrylic monomer in the raw monomer material (a) forming the styrene-acrylic resin (A), or the content of a constitutional unit derived from the (meth)acrylic monomer in the styrene-acrylic resin (A) constituting the styrene-acrylic resin unit, is preferably not less than 2% by mass, more preferably not less than 4% by mass and even more preferably not less than 6% by mass, and is also preferably not more than 50% by mass, more preferably not more than 40% by mass, even more preferably not more than 30% by mass, further even more preferably not more than 20% by mass, still further even more preferably not more than 15% by mass and furthermore preferably not more than 10% by mass, from the viewpoint of improving low-temperature fusing properties, anti-hot offset properties, heat-resistant storage properties and charge stability of the resulting toner.

The total content of the styrene compound and the (meth)acrylic monomer in the raw monomer material (a) forming the styrene-acrylic resin (A), or the total content of the constitutional unit derived from the styrene compound and the constitutional unit derived from the (meth)acrylic monomer in the styrene-acrylic resin (A) constituting the styrene-acrylic resin unit, is preferably not less than 90% by mass, more preferably not less than 95% by mass and even more preferably not less than 99% by mass, and is also not more than 100% by mass, and furthermore preferably 100% by mass, from the viewpoint of improving low-temperature fusing properties, anti-hot offset properties, heat-resistant storage properties and charge stability of the resulting toner.

### (Production of Resin (A))

In the present invention, the styrene-acrylic resin (A) constituting the styrene-acrylic resin unit is preferably produced by the polymerization reaction conducted in the polymerization system that is independent of and separate from the polymerization system for the raw monomer material (b) forming the polyester-based resin (B) in the absence of the polyester-based resin (B) constituting the polyester-based resin unit, from the viewpoint of well controlling a molecular weight and a molecular weight distribution of the resin and copolymerizability of the monomers as well as from the viewpoint of improving low-temperature fusing properties, anti-hot offset properties, heat-resistant storage properties and charge stability of the resulting toner. From the aforementioned viewpoints, the polymerization method for production of the styrene-acrylic resin (A) may include, in addition to the bulk polymerization method, the polymerization method capable of well controlling a molecular weight and a molecular weight distribution of the resin and copolymerizability of the monomers, for example, such as a solution polymerization method, a suspension polymerization method and an emulsion polymerization method. More specifically, from the aforementioned viewpoints, in the binder resin of the present invention, the polymerization method for production of the styrene-acrylic resin (A) is not particularly limited, as long as the binder resin for toners contains the composite resin that is formed by bonding the styrene-acrylic resin unit and the polyester-based resin unit to each other through a covalent bond, and the acid value of the styrene-acrylic resin (A) constituting the styrene-acrylic resin unit is not less than 40 mgKOH/g.

The styrene-acrylic resin (A) is preferably produced by a process including the following step I from the viewpoint of facilitating control of a molecular weight and a molecular weight distribution of the resin and copolymerizability of the monomers.

Step I: polymerizing the raw monomer material (a) in the polymerization system that is independent of and separate from the polymerization system for the raw monomer material (b) forming the polyester-based resin (B) constituting the polyester-based resin unit in the absence of the polyester-based resin (B), to obtain the styrene-acrylic resin (A).

The styrene-acrylic resin (A) is preferably produced by bulk polymerization or solution polymerization, and more preferably produced by bulk polymerization, from the viewpoint of facilitating control of a molecular weight and a molecular weight distribution of the resin and copolymerizability of the monomers. That is, the polymerization of the raw monomer material (a) in the step I is preferably conducted by bulk polymerization or solution polymerization, and more preferably by bulk polymerization.

The "bulk polymerization" as used in the present invention means addition polymerization that is conducted under such a condition that substantially no solvent is present in a reaction system, i.e., in the absence of a solvent.

The bulk polymerization (in the case where the polymerization conducted in the step I is bulk polymerization) may be conducted using a radical generator.

Examples of the radical generator include peroxides, such as di-*tert-*butyl peroxide, etc., persulfuric acid salts, such as sodium persulfate, etc., azo compounds, such as 2,2'-azobis(2,4-dimethyl valeronitrile), etc., and the like.

The concentration of the radical generator used in the bulk polymerization is preferably not more than 7% by mass, more preferably not more than 5% by mass, even more preferably not more than 2% by mass, further even more preferably not more than 1% by mass, still further even more preferably not more than 0.5% by mass, and furthermore preferably 0% by mass, on the basis of the whole amount of the raw monomer material (a) for the styrene-acrylic resin (A) assuming that the whole amount of the raw monomer material (a) is 100% by mass, from the viewpoint of well controlling a molecular weight and a molecular weight distribution of the resin and copolymerizability of the monomers as well as from the viewpoint of improving low-temperature fusing properties, anti-hot offset properties, heat-resistant storage properties and charge stability of the resulting toner. More specifically, the concentration of the radical generator used in the bulk polymerization is preferably not more than 7 parts by mass, more preferably not more than 5 parts by mass, even more preferably not more than 2 parts by mass, further even more preferably not more than 1 part by mass, still further even more preferably not more than 0.5 part by mass, and furthermore preferably 0 part by mass, on the basis of 100 parts by mass of the whole amount of the raw monomer material (a). That is, the bulk polymerization is preferably conducted in the absence of a catalyst.

The bulk polymerization (in the case where the polymerization conducted in the step I is bulk polymerization) is preferably conducted under the applied pressure condition not lower than an ordinary pressure at a high temperature, and the bulk polymerization is more preferably continuous bulk polymerization that is conducted under high-temperature and high-pressure conditions.

The applied pressure condition as used in the present invention means such a condition that the contents of a closed container, such as an autoclave, are heated to a boiling point or higher temperature under an ordinary pressure.

Under the applied pressure condition not lower than an ordinary pressure at a high temperature, by allowing radicals generated owing to heat initiation reaction of the raw monomer material (a) to function as a polymerization initiator, the addition polymerization is caused to proceed even under such a condition that the amount of the radical generator present in the system is relatively small, so that it is possible to obtain the styrene-acrylic resin (A) having a narrow molecular weight distribution.

Moreover, in the case where the bulk polymerization is a continuous reaction, the obtained resin can be controlled in not only the molecular weight distribution, but also monomeric composition distribution, so that it is possible to obtain the styrene-acrylic resin (A) which has a narrow monomeric composition distribution and therefore shows a more homogeneous composition. As a result, it is possible to improve low-temperature fusing properties, anti-hot offset properties, heat-resistant storage properties and charge stability of the resulting toner.

The temperature used in the bulk polymerization is preferably not lower than 160° C, more preferably not lower than 170° C, even more preferably not lower than 180° C and further even more preferably not lower than 190° C, and is also preferably not higher than 350° C and more preferably not higher than 320° C, from the same viewpoint as described above.

The "solution polymerization" as used in the present invention means addition polymerization that is conducted under such a condition that a solvent is present in the reaction system. The polymer obtained in the solution polymerization may be dissolved in the solvent, or may be precipitated without being dissolved in the solvent. In the solution polymerization, the raw monomer material (a) is preferably subjected to addition polymerization by heating the raw monomer material (a) in the solvent together with a polymerization initiator, a polymerization chain transfer agent, etc.

Examples of the polymerization initiator include peroxides, such as dibutyl peroxide, etc., persulfuric acid salts, such as sodium persulfate, etc., and azo compounds, such as 2,2'-azobis(2,4-dimethyl valeronitrile), etc.

The amount of the polymerization initiator added is not particularly limited, and is preferably not less than 0.5 part by mass, and is also preferably not more than 30 parts by mass, on the basis of 100 parts by mass of the whole amount of the raw monomer material (a).

Examples of the polymerization chain transfer agent include mercaptans, such as 2-mercaptoethanol, 3-mercaptopropionic acid, etc.

The amount of the polymerization chain transfer agent added is not particularly limited, and is preferably not less than 0.01 part by mass, and is also preferably not more than 10 parts by mass, on the basis of 100 parts by mass of the whole amount of the raw monomer material (a).

In the case of the solution polymerization, after completion of the polymerization reaction, the polymer thus produced may be isolated from the reaction solution and purified by conventionally known methods, such as reprecipitation, removal of the solvent by distillation, etc.

The acid value of the styrene-acrylic resin (A) is not less than 40 mgKOH/g, preferably not less than 43 mgKOH/g, more preferably not less than 46 mgKOH/g, even more preferably not less than 48 mgKOH/g and further even more preferably not less than 50 mgKOH/g, and is also preferably not more than 300 mgKOH/g, more preferably not more than 250 mgKOH/g, even more preferably not more than 200 mgKOH/g, further even more preferably not more than 150 mgKOH/g and still further even more preferably not more than 100 mgKOH/g, from the viewpoint of hybridizing the styrene-acrylic resin (A) and the polyester-based resin (B) constituting the polyester-based resin unit as well as from the viewpoint of improving low-temperature fusing properties, anti-hot offset properties, heat-resistant storage properties and charge stability of the resulting toner.

The weight-average molecular weight of the styrene-acrylic resin (A) is preferably not less than 3,000, more preferably not less than 5,000 and even more preferably not less than 7,000, and is also preferably not more than 200,000, more preferably not more than 100,000, even more preferably not more than 50,000, further even more preferably not more than 30,000, still further even more preferably not more than 20,000 and furthermore preferably not more than 10,000, from the viewpoint of improving low-temperature fusing properties, anti-hot offset properties, heat-resistant storage properties and charge stability of the resulting toner.

The weight-average molecular weight of the styrene-acrylic resin (A) may be controlled by suitably adjusting a polymerization temperature and a polymerization time.

The glass transition temperature of the styrene-acrylic resin (A) is preferably not lower than 45° C and more preferably not lower than 50° C, and is also preferably not higher than 120° C, more preferably not higher than 90° C, even more preferably not higher than 70° C and further even more preferably not higher than 55° C, from the viewpoint of improving low-temperature fusing properties, anti-hot offset properties, heat-resistant storage properties and charge stability of the resulting toner.

The softening point of the styrene-acrylic resin (A) is preferably not lower than 90° C, more preferably not lower than 100° C and even more preferably not lower than 105° C, and is also preferably not higher than 160° C, more preferably not higher than 140° C and even more preferably not higher than 120° C, from the viewpoint of improving low-temperature fusing properties, anti-hot offset properties, heat-resistant storage properties and charge stability of the resulting toner. Among them, from the viewpoint of improving low-temperature fusing properties, anti-hot offset properties, heat-resistant storage properties and charge stability of the resulting toner, it is more preferred that the styrene-acrylic resin (A) constituting the styrene-acrylic resin unit has a glass transition temperature of not lower than 50° C and a softening point of not lower than 105° C.

The acid value, weight-average molecular weight, glass transition temperature and softening point of the styrene-acrylic resin (A) may be measured by the respective methods described in Examples below.

### [Polyester-Based Resin (B)]

The polyester-based resin (B) constitutes the polyester-based resin unit of the composite resin, and is preferably a polyester resin in the form of a polycondensate of an alcohol component (b-al) and a carboxylic acid component (b-ac) as the raw monomer material (b). In the following, the details of the alcohol component (b-al) and the carboxylic acid component (b-ac) which are contained in the aforementioned polyester resin are explained.

### (Alcohol Component (b-al))

Examples of the alcohol component (b-al) include an aromatic diol, an aliphatic diol, an alicyclic diol and a trivalent or higher-valent polyhydric alcohol.

As the aromatic diol, there may be mentioned, for example, an alkyleneoxide adduct of bisphenol A [2,2-bis(4-hydroxyphenyl)propane] (hereinafter also referred to merely as "BPA-AO"). The BPA-AO is preferably represented by the following formula (I): 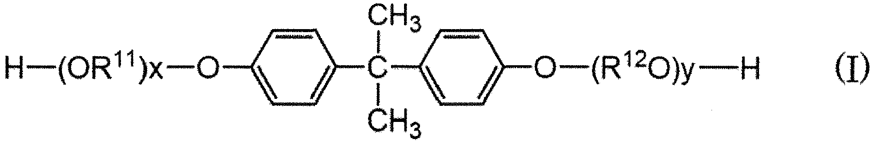 wherein OR¹¹ and R¹²O are respectively an alkyleneoxy group; R¹¹ and R¹² are each independently an alkylene group having not less than 1 and not more than 4 carbon atoms (preferably an ethylene group or a propylene group); and x and y respectively represent an average molar number of addition of an alkyleneoxide, and are each independently a positive number in which an average value of a sum of x and y is preferably not less than 1, more preferably not less than 1.5 and even more preferably not less than 2, and is also preferably not more than 16, more preferably not more than 8 and even more preferably not more than 4.

Specific examples of the BPA-AO include polyoxypropylene (2.2)-2,2-bis(4-hydroxyphenyl)propane, polyoxypropylene (3.3)-2,2-bis(4-hydroxyphenyl)propane, polyoxyethylene (2.2)-2,2-bis(4-hydroxyphenyl)propane, polyoxyethylene (2.0)-2,2-bis(4-hydroxyphenyl)propane, polyoxypropylene (2.0)- polyoxyethylene (2.0)-2,2-bis(4-hydroxyphenyl)propane, polyoxypropylene (6)-2,2-bis(4-hydroxyphenyl)propane, and the like.

The respective numerical values in the aforementioned parentheses correspond to an average value of a sum of x and y in the above formula (I).

As the BPA-AO, preferred are a propyleneoxide adduct of bisphenol A (hereinafter also referred to merely as "BPA-PO") and an ethyleneoxide adduct of bisphenol A (hereinafter also referred to merely as "BPA-EO"). These BPA-AOs may be used alone or in combination of any two or more thereof.

The number of carbon atoms in the aliphatic diol is preferably not less than 2, and is also preferably not more than 18, more preferably not more than 14, even more preferably not more than 10 and further even more preferably not more than 6.

Examples of the aliphatic diol include ethylene glycol, 1,2-propanediol, 1,3-propanediol, 1,4-butanediol, neopentyl glycol, 1,4-butenediol, 1,5-pentanediol, 1,6-hexanediol, diethylene glycol, triethylene glycol, polyethylene glycol, dipropylene glycol, polypropylene glycol and polytetramethylene glycol.

Examples of the alicyclic diol include 1,4-cyclohexanedimethanol, hydrogenated bisphenol A, and an alkyleneoxide (having not less than 2 and not more than 4 carbon atoms) adduct (an average molar number of addition of alkyleneoxide: not less than 2 and not more than 12) of the hydrogenated bisphenol A.

Examples of the trivalent or higher-valent polyhydric alcohol include sorbitol, 1,2,3,6-hexane tetrol, 1,4-sorbitan, pentaerythritol, dipentaerythritol, tripentaerythritol, 1,2,4-butanetriol, 1,2,5-pentanetriol, glycerol, 2-methyl propanetriol, 2-methyl-1,2,4-butanetriol, trimethylolethane, trimethylolpropane and 1,3,5-trihydroxymethyl benzene.

Incidentally, from the viewpoint of well controlling a molecular weight or a softening point of the resin, the alcohol component (b-al) may also contain a monohydric alcohol.

These alcohol components may be used alone or in combination of any two or more thereof.

Among these alcohol components (b-al), preferred are those alcohol components containing at least one compound selected from the group consisting of an aromatic diol and an aliphatic diol having not less than 2 and not more than 18 carbon atoms, more preferred are those alcohol components containing at least one compound selected from the group consisting of an alkyleneoxide adduct of bisphenol A, ethylene glycol, 1,2-propanediol, 1,3-propanediol and neopentyl glycol, and even more preferred are those alcohol components containing an alkyleneoxide adduct of bisphenol A (BPA-AO).

The content of the BPA-AO in the alcohol component (b-al) is preferably not less than 80 mol%, more preferably not less than 90 mol%, even more preferably not less than 95 mol% and further even more preferably not less than 98 mol%, and is also not more than 100 mol%, and furthermore preferably 100 mol%.

### (Carboxylic Acid Component (b-ac))

Examples of the carboxylic acid component (b-ac) include a dicarboxylic acid compound and a trivalent or higher-valent polycarboxylic acid compound.

Examples of the dicarboxylic acid compound include an aromatic dicarboxylic acid compound, an aliphatic dicarboxylic acid compound and an alicyclic dicarboxylic acid compound.

The number of carbon atoms of the dicarboxylic acid compound is preferably not less than 2 and more preferably not less than 3, and is also preferably not more than 30 and more preferably not more than 20.

Examples of the aromatic dicarboxylic acid compound include phthalic acid, isophthalic acid and terephthalic acid. Among these aromatic dicarboxylic acid compounds, preferred are isophthalic acid and terephthalic acid, and more preferred is terephthalic acid.

Examples of the aliphatic dicarboxylic acid compound include oxalic acid, malonic acid, maleic acid, fumaric acid, citraconic acid, itaconic acid, glutaconic acid, succinic acid, pentanedioic acid, adipic acid, sebacic acid, dodecanedioic acid, azelaic acid, and substituted succinic acids obtained by substituting succinic acid with an aliphatic hydrocarbon group having not less than 1 and not more than 20 carbon atoms.

Examples of the substituted succinic acids obtained by substituting succinic acid with an aliphatic hydrocarbon group having not less than 1 and not more than 20 carbon atoms include *n*-dodecenyl succinic acid, isododecenyl succinic acid, *n*-dodecyl succinic acid, isododecyl succinic acid, *n*-octenyl succinic acid, *n*-octyl succinic acid, isooctenyl succinic acid, isooctyl succinic acid, and the like.

Examples of the alicyclic dicarboxylic acid compound include cyclohexanedicarboxylic acid.

Examples of the trivalent or higher-valent polycarboxylic acid compound include 1,2,4-benzenetricarboxylic acid (trimellitic acid), 2,5,7-naphthalenetricarboxylic acid and pyromellitic acid.

Among these carboxylic acid components (b-ac), preferred are those carboxylic acid components containing at least one compound selected from the group consisting of an aromatic dicarboxylic acid compound, an aliphatic dicarboxylic acid compound and a tivalent or higher-valent polycarboxylic acid compound, more preferred are those carboxylic acid components containing at least one compound selected from the group consisting of terephthalic acid, isophthalic acid, maleic acid, fumaric acid, an alkenyl succinic acid and trimellitic acid, even more preferred are those carboxylic acid components containing at least one compound selected from the group consisting of terephthalic acid, isophthalic acid, fumaric acid and trimellitic acid, and further even more preferred are those carboxylic acid components containing at least one aromatic dicarboxylic acid compound selected from the group consisting of terephthalic acid and isophthalic acid.

The content of the aromatic dicarboxylic acid compound in the carboxylic acid component (b-ac) is preferably not less than 50 mol%, more preferably not less than 60 mol%, even more preferably not less than 70 mol%, further even more preferably not less than 90 mol% and still further even more preferably not less than 95 mol%, and is also not more than 100 mol%, and furthermore preferably 100 mol%.

Incidentally, from the viewpoint of well controlling the degree of polymerization of the resin, the carboxylic acid component (b-ac) may also appropriately contain a trivalent or higher-valent polycarboxylic acid compound.

The trivalent or higher-valent polycarboxylic acid compound may be used in an amount of preferably not less than 0.2% by mass and not more than 30% by mass, and more preferably not less than 0.5% by mass and not more than 20% by mass, on the basis of the wholoe amount of the raw monomer material (b) forming the polyester-based resin (B).

The equivalent ratio of a carboxy group (COOH group) of the carboxylic acid component (b-ac) to a hydroxy group (OH group) of the alcohol component (b-al) [COOH group/OH group] is preferably not less than 0.7, more preferably not less than 0.8, even more preferably not less than 0.9 and further even more preferably not less than 1.0, and is also preferably not more than 1.3 and more preferably not more than 1.2.

### (Production of Resin (B))

The resin (B) is preferably produced, for example, by subjecting the raw monomer material (b) containing the alcohol component (b-al) the carboxylic acid component (b-ac) to polycondesation reaction. The polycondesation reaction is more preferably conducted by the process including the following step I' from the viewpoint of improving low-temperature fusing properties, anti-hot offset properties, heat-resistant storage properties and charge stability of the resulting toner.

Step I': polymerizing the raw monomer material (b) in the polymerization system that is independent of and separate from the polymerization system for the raw monomer material (a) forming the styrene-acrylic resin (A) constituting the styrene-acrylic resin unit, in the absence of the styrene-acrylic resin (A) constituting the styrene-acrylic resin unit, to obtain the polyester-based resin (B).

The polycondensation reaction in the step I' may be conducted, if required, in the presence of an esterification catalyst, such as tin (II) di(2-ethyl hexanoate), dibutyl tin oxide, titanium diisopropylate bis(triethanol aminate), etc., in an amount of not less than 0.01 part by mass and not more than 5 parts by mass on the basis of 100 parts by mass of the whole amount of the raw monomer material (b); and an esterification co-catalyst, such as gallic acid (identical to 3,4,5-trihydroxybenzoic acid), etc., in an amount of not less than 0.001 part by mass and not more than 0.5 part by mass on the basis of 100 parts by mass of the whole amount of the raw monomer material (b).

In addition, when using a monomer having an unsaturated bond, such as fumaric acid, etc., in the polycondensation reaction in the step I', a radical polymerization inhibitor may also be used, if required, in the reaction in an amount of preferably not less than 0.001 part by mass and not more than 0.5 part by mass on the basis of 100 parts by mass of the whole amount of the raw monomer material (b). Examples of the radical polymerization inhibitor include 4-*tert-*butyl catechol.

The temperature used in the polycondensation reaction in the step I' is preferably not lower than 120° C, more preferably not lower than 160° C and even more preferably not lower than 180° C, and is also preferably not higher than 260° C and more preferably not higher than 240° C. Meanwhile, the polycondensation reaction may be carried out in an inert gas atmosphere.

The softening point of the polyester-based resin (B) is preferably not lower than 80° C, more preferably not lower than 90° C and even more preferably not lower than 100° C, and is also preferably not higher than 140° C, more preferably not higher than 130° C and even more preferably not higher than 120° C.

The glass transition temperature of the polyester-based resin (B) is preferably not lower than 50° C, more preferably not lower than 55° C and even more preferably not lower than 60° C, and is also preferably not higher than 80° C, more preferably not higher than 75° C and even more preferably not higher than 70° C.

The acid value of the polyester-based resin (B) is preferably not less than 2 mgKOH/g, and is also preferably not more than 30 mgKOH/g, more preferably not more than 20 mgKOH/g and even more preferably not more than 10 mgKOH/g.

The hydroxy value of the polyester-based resin (B) is preferably not less than 20 mgKOH/g, more preferably not less than 30 mgKOH/g and even more preferably not less than 40 mgKOH/g, and is also preferably not more than 80 mgKOH/g, more preferably not more than 70 mgKOH/g and even more preferably not more than 60 mgKOH/g.

The softening point, glass transition temperature, acid value and hydroxy value of the polyester-based resin (B) may be measured by the respective methods described in Examples below.

### [Process for Producing binder resin for Toners]

The binder resin of the present invention contains the composite resin that is obtained by hybridizing the styrene-acrylic resin (A) constituting the styrene-acrylic resin unit and the polyester-based resin (B) constituting the polyester-based resin unit.

The process for producing the binder resin according to the present invention preferably includes the following steps I and II from the viewpoint of improving low-temperature fusing properties, anti-hot offset properties, heat-resistant storage properties and charge stability of the resulting toner.

Step I: polymerizing the raw monomer material (a) in the polymerization system that is independent of and separate from the polymerization system for the raw monomer material (b) forming the polyester-based resin (B) constituting the polyester-based resin unit, in the absence of the polyester-based resin (B), to obtain the styrene-acrylic resin (A); and

Step II: bonding the styrene-acrylic resin (A) obtained in the step I and the polyester-based resin (B) to each other through a covalent bond to thereby obtain the binder resin for toners which contains the composite resin.

The production of the styrene-acrylic resin (A) in the step I is conducted in the same manner as described previously.

The process for producing the binder resin according to the present invention preferably further includes the aforementioned step I' from the viewpoint of improving low-temperature fusing properties, anti-hot offset properties, heat-resistant storage properties and charge stability of the resulting toner.

The production of the polyester-based resin (B) in the step I' may be conducted by the same method as described above.

In the case where the production process of the present invention includes the step I', the step II is preferably the step of bonding the styrene-acrylic resin (A) obtained in the step I and the polyester-based resin (B) obtained in the step I' through a covalent bond formed by the polymer reaction therebetween to thereby obtain the binder resin for toners which contains the aforementioned composite resin. More specifically, the polymer reaction in the step II is preferably a condensation reaction between the styrene-acrylic resin (A) and the polyester-based resin (B) from the viewpoint of achieving sufficient hybridization of the resins as well as from the viewpoint of improving low-temperature fusing properties, anti-hot offset properties, heat-resistant storage properties and charge stability of the resulting toner. By conducting the condensation reaction, the styrene-acrylic resin (A) and the polyester-based resin (B) are bonded and hybridized with each other through an ester bond as the covalent bond. As the condensation reaction, there may be mentioned a condensation reaction between a carboxy group of the styrene-acrylic resin (A) and a hydroxy group of the polyester-based resin (B), or a condensation reaction between a hydroxy group of the styrene-acrylic resin (A) and a carboxy group of the polyester-based resin (B).

In the step II, from the viewpoint of achieving sufficient hybridization of the resins as well as from the viewpoint of improving low-temperature fusing properties, anti-hot offset properties, heat-resistant storage properties and charge stability of the resulting toner, the styrene-acrylic resin (A) and the polyester-based resin (B) are preferably hybridized with each other by forming a covalent bond therebetween via a compound that is capable of reacting with both of the raw monomer material (a) forming the styrene-acrylic resin (A) and the raw monomer material (b) forming the resin (B) (hereinafter also referred to as a "bireactive compound"). More specifically, the step II is preferably the step of forming a covalent bond between the styrene-acrylic resin (A) and the polyester-based resin (B) via a constitutional unit derived from the bireactive compound that is contained in either one of the styrene-acrylic resin (A) and the polyester-based resin (B) to thereby obtain the binder resin for toners which contains the aforementioned composite resin, and more preferably the step of forming a covalent bond between the styrene-acrylic resin (A) and the polyester-based resin (B) via a constitutional unit derived from the bireactive compound that is contained in the styrene-acrylic resin (A) by subjecting the styrene-acrylic resin (A) and the polyester-based resin (B) to the polymer reaction to thereby obtain the binder resin for toners which contains the aforementioned composite resin.

The bireactive compound is preferably a compound that is capable of reacting with both of the raw monomer materials of the styrene-acrylic resin (A) and the polyester-based resin (B), and more preferably a compound that is capable of hybridizing the styrene-acrylic resin (A) and the polyester-based resin (B) by forming an ester bond therebetween which is obtained by the condensation reaction between the styrene-acrylic resin (A) and the polyester-based resin (B). Examples of the bireactive compound includes those compounds represented by the following general formulae (II-1) and (II-2). 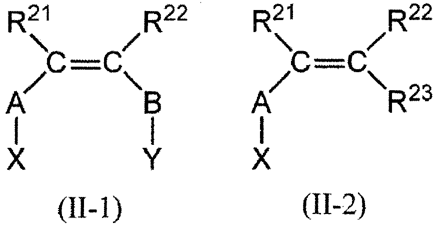 wherein R²¹, R²² and R²³ may be the same or different from each other, and are respectively a hydrogen atom, a hydroxy group, an alkyl group, alkoxy group, aryl group or vinyl group which may have a substituent group, or a halogen atom, and these R²¹, R²² and R²³ groups may be bonded to each other to form a ring; A and B may be the same or different from each other, and are respectively a group represented by the following general formula (III-1), general formula (III-2) or general formula (III-3); and X and Y may be the same or different from each other, and are respectively -COOR⁴ or -OR⁵ wherein R⁴ and R⁵ are respectively a hydrogen atom or a lower alkyl group that may have a substituent group. 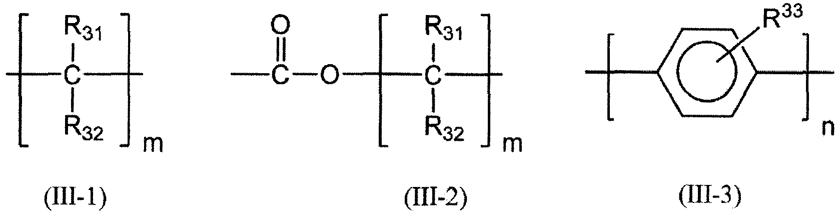 wherein R³¹, R³² and R³³ may be the same or different from each other, and are respectively a hydrogen atom, a hydroxy group, an alkyl group, alkoxy group, aryl group or vinyl group which may have a substituent group, or a halogen atom, and these R³¹, R³² and R³³ groups may be bonded to each other to form a ring; m is a number of 0 to 5; and n is a number of 0 to 2.

These bireactive compounds are preferably capable of reacting with both of the raw monomer materials of the styrene-acrylic resin (A) and the polyester-based resin (B). However, if the respective raw monomer materials of the styrene-acrylic resin (A) and the polyester-based resin (B) are constituted of two or more monomers, the bireactive compounds may be reactive with at least one of the two or more monomers.

Specific examples of the alkyl group, the alkoxy group, the aryl group, the vinyl group and the halogen atom among the groups represented by R²¹ to R²³ and R³¹ to R³³ in the general formulae (II-1), (II-2), and (III-1) to (III-3) as well as preferred forms thereof are as follows.

As the alkyl group, preferred are those linear or branched alkyl groups having not less than 1 and not more than 6 carbon atoms, and more preferred are those linear or branched alkyl groups having not less than 1 and not more than 4 carbon atoms. Examples of the alkyl group include a methyl group, an ethyl group, an *n*-propyl group, an *i*-propyl group, an *n*-butyl group and a *tert-*butyl group. These alkyl groups may have a substituent group, such as a phenyl group, a naphthyl group, a hydroxy group, etc.

Examples of the alkoxy group include a methoxy group, an ethoxy group, an *n*-propoxy group, an *i*-propoxy group and a t-butoxy group. These alkoxy groups may have a substituent group, such as a hydroxy group, a carboxy group, etc.

Examples of the aryl group include a phenyl group, a benzyl group and a naphthyl group. These aryl groups may have a substituent group, such as a methyl group, an ethyl group, a methoxy group, an ethoxy group, a carboxy group, a hydroxy group, etc.

The vinyl group may may have a substituent group, for example, such as a hydroxy group, a phenyl group, an alkyl group, an alkoxy group or a carboxy group.

Examples of the halogen atom include a fluorine atom, a chlorine atom, a bromine atom and an iodine atom. Among these halogen atoms, preferred are a chlorine atom and a bromine atom.

As the lower alkyl groups represented by R⁴ and R⁵, preferred are those lower alkyl groups having not less than 1 and not more than 4 carbon atoms. Examples of the lower alkyl groups include a methyl group, an ethyl group, and the like. These lower alkyl groups may have a substituent group, such as a hydroxy group, etc.

In the case where X in the general formula (II-2) is a carboxy group, as the compounds represented by the general formula (II-2), there may be mentioned ethylenically unsaturated monocarboxylic acid compounds represented by the following general formulae (IV-1) to (IV-3). 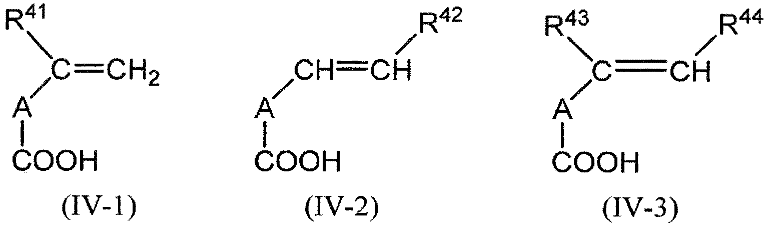 wherein R⁴¹ and R⁴² are respectively a hydrogen atom, an alkyl group, aryl group or vinyl group which may have a substituent group, or a halogen atom, which are the same as the groups described as to R²¹ to R²³; R⁴³ and R⁴⁴ may be the same or different from each other, and are respectively an alkyl group, aryl group or vinyl group which may have a substituent group, or a halogen atom, which are the same as the groups described as to R²¹ to R²³; and A is the same as described above.

Specific examples of the ethylenically unsaturated monocarboxylic acid compounds represented by the general formulae (IV-1) to (IV-3) include acrylic acid, methacrylic acid, crotonic acid, cinnamic acid, and lower alkyl esters and anhydrides of these acids.

In the case where X and Y in the general formula (II-1) are respectively a carboxy group, as the compounds represented by the general formula (II-1), there may be mentioned ethylenically unsaturated dicarboxylic acid compounds represented by the following general formulae (V-1) and (V-2). 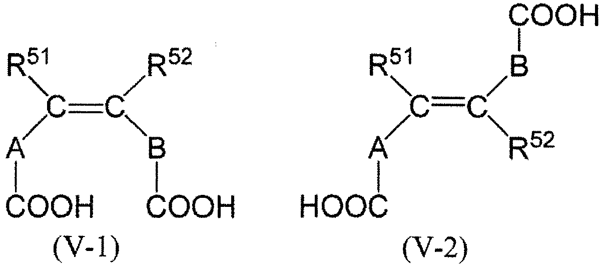 wherein R⁵¹ and R⁵² are respectively a hydrogen atom, an alkyl group, aryl group or vinyl group which may have a substituent group, or a halogen atom, which are the same as the groups described as to R²¹ to R²³; and A and B are respectively the same as described above.

Specific examples of the ethylenically unsaturated dicarboxylic acid compounds represented by the general formulae (V-1) and (V-2) include maleic acid, fumaric acid, itaconic acid, mesaconic acid, citraconic acid, and lower alkyl esters and anhydrides of these acids.

In the case where X in the general formula (II-2) is a hydroxy group, as the compounds represented by the general formula (II-2), preferred are ethylenically unsaturated monoalcohols represented by the following general formulae (VI-1) to (VI-3). 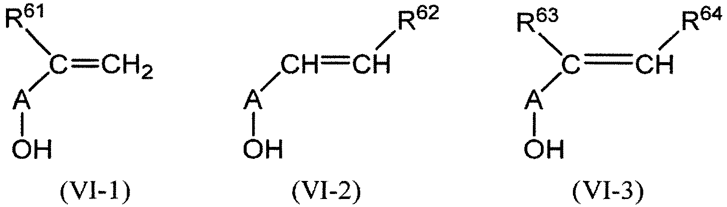 wherein R⁶¹ to R⁶⁴ are respectively a hydrogen atom, or an alkyl group or aryl group which may have a substituent group, which are the same as the groups described as to R²¹ to R²³; and A is the same as described above.

Specific examples of the ethylenically unsaturated monoalcohols represented by the general formulae (VI-1) to (VI-3) include 2-vinyl phenol, 4-vinyl phenol, 4-(1-methyl ethenyl)phenol, 2-allyl phenol, 4-allyl phenol, 2-hydroxyethyl (meth)acrylate and 2-hydroxyethylhexyl (meth)acrylate.

In the case where X and Y in the general formula (II-1) are respectively a hydroxy group, as the compounds represented by the general formula (II-1), preferred are ethylenically unsaturated dialcohols represented by the following general formulae (VII-1) and (VII-2). 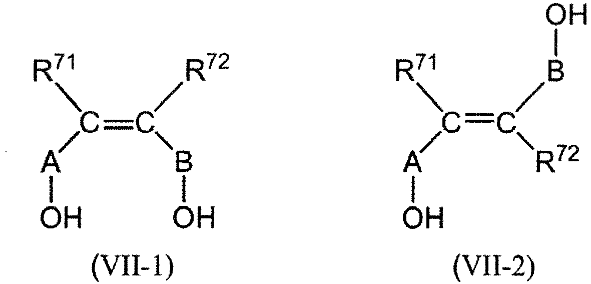 wherein R⁷¹ and R⁷² are respectively a hydrogen atom, an alkyl group, aryl group or vinyl group which may have a substituent group, or a halogen atom, which are the same as the groups described as to R²¹ to R²³; and A and B are respectively the same as described above.

The bireactive compound is preferably an ethylenically unsaturated monocarboxylic acid compound, and more preferably acrylic acid, from the viewpoint of achieving sufficient hybridization of the resins as well as from the viewpoint of improving low-temperature fusing properties, anti-hot offset properties, heat-resistant storage properties and charge stability of the resulting toner.

The bireactive compound is preferably introduced as a raw monomer material for any one of the styrene-acrylic resin (A) and the polyester-based resin (B) into a polymer skeleton thereof before hybridizing these resins, followed by hybridizing the thus introduced resin with the other resin through the bireactive compound. From the viewpoint of achieving sufficient hybridization of the resins, it is more preferred that after introducing the bireactive compound as the raw monomer material (a) for the styrene-acrylic resin (A) into a polymer skeleton thereof before hybridizing the resins, the styrene-acrylic resin (A) and the polyester-based resin (B) are hybridized with each other through the bireactive compound. In the case where the raw monomer material (a) for the styrene-acrylic resin (A) contains the ethylenically unsaturated monocarboxylic acid compound as the bireactive compound, since the styrene-acrylic resin (A) contains a constitutional unit derived from the ethylenically unsaturated monocarboxylic acid compound, the styrene-acrylic resin (A) and the polyester-based resin (B) are hybridized with each other through an ester bond formed by the condensation reaction between a carboxy group introduced into a polymer skeleton of the styrene-acrylic resin (A) and a hydroxy group of the polyester-based resin (B).

The amount of the bireactive compound used which is capable of reacting with both of the styrene-acrylic resin (A) and the polyester-based resin (B) is preferably not less than 0.5% by mass, more preferably not less than 1% by mass, even more preferably not less than 3% by mass and further even more preferably not less than 5% by mass, and is also preferably not more than 40% by mass, more preferably not more than 35% by mass, even more preferably not more than 30% by mass, further even more preferably not more than 25% by mass, still further even more preferably not more than 20% by mass, furthermore preferably not more than 15% by mass and even furthermore preferably not more than 10% by mass, on the basis of the whole amount of the raw monomer material (a) for the styrene-acrylic resin (A) constituting the styrene-acrylic resin unit assuming that the whole amount of the raw monomer material (a) is 100% by mass. That is, the amount of the bireactive compound used is preferably not less than 0.5 part by mass, more preferably not less than 1 part by mass, even more preferably not less than 3 parts by mass and further even more preferably not less than 5 parts by mass, and is also preferably not more than 40 parts by mass, more preferably not more than 35 parts by mass, even more preferably not more than 30 parts by mass, further even more preferably not more than 25 parts by mass, still further even more preferably not more than 20 parts by mass, furthermore preferably not more than 15 parts by mass and even furthermore preferably not more than 10 parts by mass, on the basis of 100 parts by mass of the whole amount of the raw monomer material (a).

The mass ratio of the polyester-based resin (B) constituting the polyester-based resin unit to the styrene-acrylic resin (A) constituting the styrene-acrylic resin unit [polyester-based resin (B)/styrene-acrylic resin (A)] in the composite resin, or the mass ratio of the whole amount of the raw monomer material (b) forming the polyester-based resin unit to the whole amount of the raw monomer material (a) forming the styrene-acrylic resin unit [whole amount of raw monomer material (b)/whole amount of raw monomer material (a)], is preferably not less than 30/70 and not more than 98/2, more preferably not less than 50/50 and not more than 95/5, and even more preferably not less than 70/30 and not more than 90/10, from the viewpoint of improving dispersibility of the styrene-acrylic resin unit as well as from the viewpoint of improving low-temperature fusing properties, anti-hot offset properties, heat-resistant storage properties and charge stability of the resulting toner.

In the case where the step II is conducted by the polymer reaction, the method of conducting the polymer reaction is not particularly limited as long as the covalent bond is formed by the method. The preferred method is such a method in which the styrene-acrylic resin (A) and the polyester-based resin (B) are heated, melted and mixed with each other.

The temperature used upon the polymer reaction in the step II is preferably not lower than 100° C, more preferably not lower than 130° C and even more preferably not lower than 150° C, and is also preferably not higher than 250° C, more preferably not higher than 230° C and even more preferably not higher than 200° C.

The polymer reaction in the step II may be conducted either under the applied pressure condition or under the reduced pressure condition from the viewpoint of improving reactivity thereof. However, from the viewpoint of facilitating the reaction, the polymer reaction is preferably conducted under an ordinary pressure.

In addition, the time of the polymer reaction may appropriately vary depending upon a reaction temperature, etc., and is preferably not less than 1 hour, and is also preferably not more than 24 hours, more preferably not more than 12 hours and even more preferably not more than 6 hours.

The content of the composite resin in the binder resin of the present invention is preferably not less than 70% by mass, more preferably not less than 80% by mass and even more preferably not less than 90% by mass, and is also not more than 100% by mass, and furthermore preferably not more than 100% by mass, from the viewpoint of improving low-temperature fusing properties, anti-hot offset properties, heat-resistant storage properties and charge stability of the resulting toner.

The softening point of the binder resin of the present invention is preferably not lower than 70° C, more preferably not lower than 85° C, even more preferably not lower than 100° C and further even more preferably not lower than 110° C, and is also preferably not higher than 150° C, more preferably not higher than 140° C, even more preferably not higher than 130° C and further even more preferably not higher than 120° C.

The glass transition temperature of the binder resin of the present invention is preferably not lower than 50° C and more preferably not lower than 53° C, and is also preferably not higher than 80° C, more preferably not higher than 70° C and even more preferably not higher than 65° C.

The acid value of the binder resin of the present invention is preferably not more than 50 mgKOH/g, more preferably not more than 40 mgKOH/g, even more preferably not more than 35 mgKOH/g and further even more preferably not more than 30 mgKOH/g. On the other hand, the acid value of the binder resin of the present invention is preferably not less than 2 mgKOH/g, more preferably not less than 8 mgKOH/g, even more preferably not less than 14 mgKOH/g and further even more preferably not less than 20 mgKOH/g.

The softening point, glass transition temperature and acid value of the binder resin of the present invention can be readily controlled to the aforementioned ranges by adjusting the kinds and amounts of raw monomer materials used, the amount of the radical generator used, the amount of the catalysts used, and the like, or suitably selecting conditions of the reaction.

The binder resin of the present invention may be used alone or in combination of any two or more kinds thereof.

As the case where the two or more binder resins of the present invention are used in combination, there may be mentioned such a case where two kinds of binder resins which are different in softening point from each other are used in combination. The difference between a softening point of the low-softening point binder resin and a softening point of the high-softening point binder resin is preferably not less than 5° C, more preferably not less than 7° C and even more preferably not less than 10° C, and is also preferably not more than 40° C, more preferably not more than 30° C and even more preferably not more than 20° C.

In the case where the low-softening point binder resin and the high-softening point binder resin are used in combination with each other, the mixing ratio of the low-softening point binder resin to the high-softening point binder resin [low-softening point binder resin/high-softening point binder resin] is preferably not less than 10/90 and not more than 90/10, more preferably not less than 20/80 and not more than 20/80, and even more preferably not less than 30/70 and not more than 70/30.

### [Toner for Development of Electrostatic Images]

The toner of the present invention contains the aforementioned binder resin.

The content of the binder resin in the toner is preferably not less than 80% by mass and more preferably not less than 90% by mass, and is also not more than 100% by mass.

The toner of the present invention contains, for example, toner particles and an external additive.

The toner particles preferably contain the aforementioned binder resin.

Moreover, the toner particles may also contain, for example, a colorant, a colorant derivative, a releasing agent, such as a wax, etc., a charge control agent, a magnetic material and other additives. Among these additives, the toner particles preferably contain a colorant.

<Colorant>

The colorant may be either a pigment or a dye.

Examples of the colorant include various kinds of carbon blacks produced by a thermal black method, an acetylene black method, a channel black method, a lamp black method, etc.; grafted carbon blacks formed by coating a surface of carbon black with a resin; nigrosine dyes; Phthalocyanine Blue, Permanent Brown FG, Brilliant Fast Scarlet, Pigment Green B, Pigment Blue 15:3, Rhodamine-B Base, Solvent Red 49, Solvent Red 146, Solvent Blue 35, etc.; mixtures of these colorants; and the like.

The content of the colorant in the toner is preferably not less than 1 part by mass and not more than 15 parts by mass, and more preferably not less than 2 parts by mass and not more than 10 parts by mass, on the basis of 100 parts by mass of the binder resin, from the viewpoint of improving optidal density of toner images.

### <Charge Control Agent>

The toner of the present invention may also contain a charge control agent. The charge control agent contained in the toner may be either a charge control agent for positive charging or a charge control agent for negative charging.

These charge control agents may be used alone or in combination of any two or more thereof.

Examples of the charge control agent for positive charging include Nigrosine dyes, triphenylmethane-based dyes containing a tertiary amine as a side chain thereof, quaternary ammonium salt compounds, polyamine resins, imidazole derivatives, and styrene-acrylic resins.

Specific examples of the Nigrosine dyes include "Nigrosine Base EX", "Oil Black BS", "Oil Black SO", "BONTRON N-01", "BONTRON N-07" and "BONTRON N-11" all commercially available from Orient Chemical Industries Co., Ltd., and the like. Specific examples of the quaternary ammonium salt compounds include "BONTRON P-51" commercially available from Orient Chemical Industries Co., Ltd., cetyltrimethylammonium bromide, and "COPY CHARGE PX VP435" commercially available from Hoechst AG. Specific examples of the polyamine resins include "AFP-B" commercially available from Orient Chemical Industries Co., Ltd. Specific examples of the imidazole derivatives include "PLZ-2001" and "PLZ-8001" both commercially available from Shikoku Chemicals Corporation. Specific examples of the styrene-acrylic resins include "FCA-701PT" commercially available from Fujikura Kasei Co., Ltd.

Among these charge control agents for positive charging, "BONTRON N-07" can be preferably used.

Specific examples of the charge control agent for negative charging include metal-containing azo dyes, metal compounds of benzylic acid compounds, metal compounds of salicylic acid compounds, copper phthalocyanine dyes, quaternary ammonium salts, nitroimidazole derivatives and organometallic compounds.

Specific examples of the metal-containing azo dyes include "VALIFAST BLACK 3804" and "BONTRON S-31" both commercially available from Orient Chemical Industries Co., Ltd., "T-77" commercially available from Hodogaya Chemical Co., Ltd., "BONTRON S-32", "BONTRON S-34" and "BONTRON S-36" all commercially available from Orient Chemical Industries Co., Ltd., and "AIZEN SPILON BLACK TRH" commercially available from Hodogaya Chemical Co., Ltd. Specific examples of the metal compounds of salicylic acid compounds include "BONTRON E-81", "BONTRON E-82", "BONTRON E-84" and "BONTRON E-85" all commercially available from Orient Chemical Industries Co., Ltd. Specific examples of the quaternary ammonium salts include "COPY CHARGE NX VP434" commercially available from Heochst AG. Specific examples of the organometallic compounds include "TN105" commercially available from Hodogaya Chemical Co., Ltd.

Among these charge control agents for negative charging, "BONTRON E-81", "BONTRON S-34", "T-77" and "AIZEN SPILON BLACK TRH" can be preferably used.

The content of the charge control agent in the toner is preferably not less than 0.1 part by mass and not more than 8 parts by mass, and more preferably not less than 0.2 part by mass and not more than 5 parts by mass, on the basis of 100 parts by mass of the binder resin.

### <Wax>

The toner of the present invention preferably contains a wax, such as a polyolefin, a paraffin wax, etc., as an anti-offset agent.

The content of the wax in the toner is preferably not less than 1 part by mass and not more than 5 parts by mass on the basis of 100 parts by mass of the binder resin. Examples of the polyolefin include polyethylene, polypropylene, and the like. Among these polyolefins, preferred are those polyolefins having a relatively low molecular weight, in particular, those polyolefins produced by a steam permeation method which have a molecular weight of not less than 3,000 and more more than 15,000. In addition, those polyolefins having a softening point of not lower than 70° C and not higher than 150° C, in particular, not lower than 120° C and not higher than 150° C, as measured by a ring and ball method, are preferably used.

### <Other Additives>

The toner particles may appropriately further contain the other additives, such as a magnetic powder, a flow modifier, a conductivity modifier, a reinforcing filler, such as fibrous materials, an oxidation inhibitor, an antioxidant, a cleanability improver, etc.

The content of the toner particles in the toner of the present invention is preferably not less than 80% by mass, more preferably not less than 90% by mass and even more preferably not less than 95% by mass, and is also not more than 100% by mass and preferably not more than 99% by mass.

The volume-median particle size (D₅₀) of the toner particles is preferably not less than 2 µm, more preferably not less than 3 µm and even more preferably not less than 5 µm, and is also preferably not more than 20 µm, more preferably not more than 15 µm and even more preferably not more than 10 µm. In the present specification, the volume-median particle size (D₅₀) as used herein means a particle size at which such a cumulative volume frequency as calculated on the basis of a volume fraction of particles from a smaller particle size side thereof becomes 50%.

### <External Additive>

The toner of the present invention may be formed of, for example, the toner particles and an external additive by treating the surface of the toner particles with an improver, such as the external additive, etc., in order to improve a flowability of the toner. Examples of the external additive include fine particles of inorganic materials, such as silica, alumina, titania, zirconia, tin oxide, zinc oxide, etc., and organic fine particles, e.g., resin particles, etc., such as melamine-based resin fine particles, polytetrafluoroethylene resin fine particles, etc. These external additives may be used alone or in combination of any two or more thereof. Among these external additives, preferred is silica, and more preferred is a hydrophobic silica formed by treating silica with a hydrophobic treatment agent.

Examples of the hydrophobic treatment agent include hexamethyl disilazane (HMDS), dimethyl dichlorosilane (DMDS), a silicone oil, octyl triethoxysilane (OTES) and methyl triethoxysilane. Among these hydrophobic treatment agents, preferred is hexamethyl disilazane.

In the case where the toner particles are surface-treated with the external additive, the content of the external additive in the toner is preferably not less than 0.05 part by mass, more preferably not less than 0.08 part by mass and even more preferably not less than 0.1 part by mass, and is also preferably not more than 5 parts by mass, more preferably not more than 3 parts by mass and even more preferably not more than 2 parts by mass, on the basis of 100 parts by mass of the toner particles, from the viewpoint of improving chargeability and flowability of the resulting toner.

### [Process for Producing Toner]

The toner of the present invention may be produced by any conventionally known methods, such as a melt-kneading method, an emulsification phase inversion method, a suspension polymerization method, an emulsification aggregation method, etc. However, from the viewpoint of enhancing productivity of the toner or improving dispersibility of the colorant therein, the toner is preferably produced in the form of a pulverized toner by the melt-kneading method.

In the melt-kneading method, the aforementioned binder resin and the colorant are uniformly dispersed, if required together with the aforementioned improver, and then the resulting mixture is melt-kneaded, cooled, pulverized and classified by conventionally known methods, whereby it is possible to obtain a toner having a volume-median particle size (D₅₀) of not less than 5 µm and not more than 15 µm.

The toner of the present invention may be used for developing latent images formed by an electrophotographic method, an electrostatic recording method, an electrostatic printing method, etc. The toner can be used as a non-magnetic one-component system developer, or as a dry two-component system developer prepared by mixing the toner with a carrier, such as an iron oxide-based carrier, a spherical iron oxide-based carrier, a ferrite-based carrier, etc., as it is, or a coated carrier formed by coating the carrier with a resin, etc.

With respect to the aforementioned embodiments, the present invention further provides the following aspects relating to the binder resin for toners, the toner for development of electrostatic images, the process for producing the binder resin for toners, etc.
<1> A binder resin for toners, containing a composite resin that is formed by bonding a styrene-acrylic resin unit and a polyester-based resin unit to each other through a covalent bond, in which:
   an acid value of a styrene-acrylic resin (A) constituting the styrene-acrylic resin unit is not less than 40 mgKOH/g.
<2> The binder resin for toners according to the above aspect <1>, wherein the composite resin is a resin that is formed by subjecting the styrene-acrylic resin (A) and a polyester-based resin (B) constituting the polyester-based resin unit to a polymer reaction to form the covalent bond therebetween.
<3> The binder resin for toners according to the above aspect <2>, wherein respective polymerization systems for the styrene-acrylic resin (A) and the polyester-based resin (B) are reaction systems that are independent of each other.
<4> The binder resin for toners according to any one of the above aspects <1> to <3>, wherein the styrene-acrylic resin (A) is in the form of an addition polymerization product of a raw monomer material (a) containing a styrene-based compound and a (meth)acrylic monomer.
<5> The binder resin for toners according to any one of the above aspects <1> to <4>, wherein the styrene-acrylic resin (A) is obtained by the polymerization conducted in a polymerization system that is independent of and separate from a polymerization system for a raw monomer material (b) forming the polyester-based resin (B) constituting the polyester-based resin unit, in the absence of the polyester-based resin (B).
<6> The binder resin for toners according to any one of the above aspects <1> to <5>, wherein the styrene-acrylic resin (A) is preferably produced by bulk polymerization or solution polymerization, and more preferably by bulk polymerization.
<7> The binder resin for toners according to the above aspect <6>, wherein the bulk polymerization for the styrene-acrylic resin (A) is conducted in the absence of a solvent.
<8> The binder resin for toners according to the above aspect <6> or <7>, wherein a concentration of a radical generator used in the bulk polymerization for the styrene-acrylic resin (A) is preferably not more than 7% by mass, more preferably not more than 5% by mass, even more preferably not more than 2% by mass, further even more preferably not more than 1% by mass, still further even more preferably not more than 0.5% by mass, and furthermore preferably 0% by mass, on the basis of the whole amount of the raw monomer material (a) for the styrene-acrylic resin (A) assuming that the whole amount of the raw monomer material (a) is 100% by mass.
<9> The binder resin for toners according to the above aspect <6> or <7>, wherein the bulk polymerization for the styrene-acrylic resin (A) is conducted in the absence of a catalyst.
<10> The binder resin for toners according to any one of the above aspects <6> to <9>, wherein a temperature used in the bulk polymerization for the styrene-acrylic resin (A) is preferably not lower than 160° C, more preferably not lower than 170° C, even more preferably not lower than 180° C and further even more preferably not lower than 190° C, and is also preferably not higher than 350° C and more preferably not higher than 320° C.
<11> The binder resin for toners according to any one of the above aspects <1> to <10>, wherein an acid value of the styrene-acrylic resin (A) is preferably not less than 43 mgKOH/g, more preferably not less than 46 mgKOH/g, even more preferably not less than 48 mgKOH/g and further even more preferably not less than 50 mgKOH/g, and is also preferably not more than 300 mgKOH/g, more preferably not more than 250 mgKOH/g, even more preferably not more than 200 mgKOH/g, further even more preferably not more than 150 mgKOH/g and still further even more preferably not more than 100 mgKOH/g.
<12> The binder resin for toners according to any one of the above aspects <1> to <11>, wherein a weight-average molecular weight of the styrene-acrylic resin (A) is preferably not less than 3,000, more preferably not less than 5,000 and even more preferably not less than 7,000, and is also preferably not more than 200,000, more preferably not more than 100,000, even more preferably not more than 50,000, further even more preferably not more than 30,000, still further even more preferably not more than 20,000 and furthermore preferably not more than 10,000.
<13> The binder resin for toners according to any one of the above aspects <1> to <12>, wherein a glass transition temperature of the styrene-acrylic resin (A) is preferably not lower than 45° C and more preferably not lower than 50° C, and is also preferably not higher than 120° C, more preferably not higher than 90° C, even more preferably not higher than 70° C and further even more preferably not higher than 55° C.
<14> The binder resin for toners according to any one of the above aspects <1> to <13>, wherein a softening point of the styrene-acrylic resin (A) is preferably not lower than 90° C, more preferably not lower than 100° C and even more preferably not lower than 105° C, and is also preferably not higher than 160° C, more preferably not higher than 140° C and even more preferably not higher than 120° C.
<15> The binder resin for toners according to any one of the above aspects <1> to <14>, wherein the styrene-acrylic resin (A) has a glass transition temperature of not lower than 50° C and a softening point of not lower than 105° C.
<16> The binder resin for toners according to any one of the above aspects <2> to <15>, wherein the polyester-based resin (B) is a polyester resin in the form of a polycondensate of an alcohol component (b-al) and a carboxylic acid component (b-ac) as the raw monomer material (b).
<17> The binder resin for toners according to any one of the above aspects <2> to <16>, wherein the polyester-based resin (B) is obtained by polymerizing the raw monomer material (b) in the polymerization system that is independent of and separate from the polymerization system for the raw monomer material (a) forming the styrene-acrylic resin (A) constituting the styrene-acrylic resin unit, in the absence of the styrene-acrylic resin (A) constituting the styrene-acrylic resin unit.
<18> The binder resin for toners according to any one of the above aspects <2> to <17>, wherein a hydroxy value of the polyester-based resin (B) is preferably not less than 20 mgKOH/g, more preferably not less than 30 mgKOH/g and even more preferably not less than 40 mgKOH/g, and is also preferably not more than 80 mgKOH/g, more preferably not more than 70 mgKOH/g and even more preferably not more than 60 mgKOH/g.
<19> The binder resin for toners according to any one of the above aspects <1> to <18>, wherein a softening point of the binder resin is preferably not lower than 70° C, more preferably not lower than 85° C, even more preferably not lower than 100° C and further even more preferably not lower than 110° C, and is also preferably not higher than 150° C, more preferably not higher than 140° C, even more preferably not higher than 130° C and further even more preferably not higher than 120° C.
<20> The binder resin for toners according to any one of the above aspects <1> to <19>, wherein a glass transition temperature of the binder resin is preferably not lower than 50° C and more preferably not lower than 53° C, and is also preferably not higher than 80° C, more preferably not higher than 70° C and even more preferably not higher than 65° C.
<21> The binder resin for toners according to any one of the above aspects <1> to <20>, wherein an acid value of the binder resin is preferably not more than 50 mgKOH/g, more preferably not more than 40 mgKOH/g, even more preferably not more than 35 mgKOH/g and further even more preferably not more than 30 mgKOH/g.
<22> The binder resin for toners according to any one of the above aspects <1> to <21>, wherein an acid value of the binder resin is preferably not less than 2 mgKOH/g, more preferably not less than 8 mgKOH/g, even more preferably not less than 14 mgKOH/g and further even more preferably not less than 20 mgKOH/g.
<23> A toner for development of electrostatic images, containing the binder resin for toners according to any one of the above aspects <1> to <22>.
<24> A process for producing a binder resin for toners which contains a composite resin that is formed by bonding a styrene-acrylic resin unit and a polyester-based resin unit to each other through a covalent bond, said process including:
   Step I: polymerizing a raw monomer material (a) in a polymerization system that is independent of and separate from a polymerization system for a raw monomer material (b) forming a polyester-based resin (B) constituting the polyester-based resin unit, in the absence of the polyester-based resin (B), to obtain a styrene-acrylic resin (A); and
   Step II: bonding the styrene-acrylic resin (A) obtained in the step I and the polyester-based resin (B) to each other through a covalent bond to thereby obtain the binder resin for toners which contains the composite resin,
   in which an acid value of the styrene-acrylic resin (A) is not less than 40 mgKOH/g.
<25> The process for producing a binder resin for toners, according to the above aspect <24>, wherein the polymerization of the raw monomer material (a) in the step I is preferably bulk polymerization or solution polymerization, and more preferably bulk polymerization.
<26> The process for producing a binder resin for toners, according to the above aspect <24> or <25>, further including the following step I':
   Step I': polymerizing the raw monomer material (b) in the polymerization system that is independent of and separate from the polymerization system for the raw monomer material (a) forming the styrene-acrylic resin (A) constituting the styrene-acrylic resin unit, in the absence of the styrene-acrylic resin (A), to obtain the polyester-based resin (B).
<27> The process for producing a binder resin for toners, according to the above aspect <26>, wherein the step II is the step of bonding the styrene-acrylic resin (A) obtained in the step I and the polyester-based resin (B) obtained in the step I' through the covalent bond formed by the polymer reaction therebetween to thereby obtain the binder resin for toners which contains the composite resin.
<28> The process for producing a binder resin for toners, according to the above aspect <27>, wherein the polymer reaction in the step II is a condensation reaction.
<29> The process for producing a binder resin for toners, according to any one of the above aspects <24> to <28>, wherein in the step II, the styrene-acrylic resin (A) and the polyester-based resin (B) are hybridized with each other by forming a covalent bond therebetween through a bireactive compound that is capable of reacting with both of the raw monomer material (a) forming the styrene-acrylic resin (A) and the raw monomer material (b) forming the polyester-based resin (B).
<30> The process for producing a binder resin for toners, according to any one of the above aspects <24> to <29>, wherein the step II is preferably the step of forming a covalent bond between the styrene-acrylic resin (A) and the polyester-based resin (B) through a constitutional unit derived from the bireactive compound that is contained in either one of the styrene-acrylic resin (A) and the polyester-based resin (B) to thereby obtain the binder resin for toners which contains the composite resin, and more preferably the step of forming a covalent bond between the styrene-acrylic resin (A) and the polyester-based resin (B) through a constitutional unit derived from the bireactive compound that is contained in the styrene-acrylic resin (A) by subjecting the styrene-acrylic resin (A) and the polyester-based resin (B) to a polymer reaction, to thereby obtain the binder resin for toners which contains the composite resin.
<31> The process for producing a binder resin for toners, according to the above aspect <29> or <30>, wherein an amount of the bireactive compound used is preferably not less than 0.5% by mass, more preferably not less than 1% by mass, even more preferably not less than 3% by mass and further even more preferably not less than 5% by mass, and is also preferably not more than 40% by mass, more preferably not more than 35% by mass, even more preferably not more than 30% by mass, further even more preferably not more than 25% by mass, still further even more preferably not more than 20% by mass, furthermore preferably not more than 15% by mass and even furthermore preferably not more than 10% by mass, on the basis of the whole amount of the raw monomer material (a) forming the styrene-acrylic resin (A) constituting the styrene-acrylic resin unit assuming that the whole amount of the raw monomer material (a) is 100% by mass.
<32> The process for producing a binder resin for toners, according to any one of the above aspects <24> to <31>, wherein a mass ratio of the polyester-based resin (B) constituting the polyester-based resin unit to the styrene-acrylic resin (A) constituting the styrene-acrylic resin unit [polyester-based resin (B)/styrene-acrylic resin (A)] in the composite resin, or a mass ratio of the whole amount of the raw monomer material (b) forming the polyester-based resin unit to the whole amount of the raw monomer material (a) forming the styrene-acrylic resin unit [whole amount of raw monomer material (b)/whole amount of raw monomer material (a)] is preferably not less than 30/70 and not more than 98/2, more preferably not less than 50/50 and not more than 95/5 and even more preferably not less than 70/30 and not more than 90/10.
<33> A binder resin for toners, containing a composite resin that is formed by bonding a styrene-acrylic resin unit and a polyester-based resin unit to each other through a covalent bond, in which:
   a styrene-acrylic resin (A) constituting the styrene-acrylic resin unit is formed by bulk polymerization; and
   an acid value of the styrene-acrylic resin (A) is not less than 40 mgKOH/g.
<34> A binder resin for toners, containing a composite resin that is formed by bonding a styrene-acrylic resin unit and a polyester-based resin unit to each other through a covalent bond, in which:
   a styrene-acrylic resin (A) constituting the styrene-acrylic resin unit and a polyester-based resin (B) constituting the polyester-based resin unit are subjected to a polymer reaction to form a covalent bond therebetween;
   the styrene-acrylic resin (A) is formed by bulk polymerization; and
   an acid value of the styrene-acrylic resin (A) is not less than 40 mgKOH/g.

### EXAMPLES

### [Measurement]

### [Acid Value and Hydroxy Value of Resin]

The acid value and the hydroxy value of the resin were measured by the method as prescribed in JIS K 0070: 1992 except that only a mixed solvent of ethanol and ether used as a measuring solvent in the method was replaced with a mixed solvent containing acetone and toluene at a volume ratio [acetone: toluene] of 1:1 upon measurement of the acid value, or with tetrahydrofuran upon measurement of the hydroxy value.

### [Weight-Average Molecular Weight of Resin]

The weight-average molecular weight of the resin was determined from a molecular weight distribution thereof measured by the following gel permeation chromatography (GPC).

### (1) Preparation of Sample Solution

A sample to be measured was dissolved in tetrahydrofuran so as to prepare a solution having a concentration of 0.5 g/100 mL. Then, the resulting solution was filtered through a fluororesin filter "FP-200" having a pore size of 2 µm available from Sumitomo Electric Industries, Co., Ltd., to remove insoluble components therefrom, thereby preparing a sample solution.

### (2) Measurement of Weight-Average Molecular Weight

Using the below-mentioned measuring apparatus and analyzing columns, tetrahydrofuran as an eluent was allowed to flow therethrough at a flow rate of 1 mL/minute, and the columns were stabilized in a thermostatic chamber at 40° C, followed by injecting 100 µL of the sample solution into the columns to conduct the measurement for a molecular weight of the sample. The molecular weight of the sample was calculated on the basis of a calibration curve previously prepared. At this time, the calibration curve was prepared by using several kinds of monodisperse polystyrenes "A-500" (Mw: 5.0 x 10²), "A-1000" (Mw: 1.01 x 10³), "A-2500" (Mw: 2.63 x 10³), "A-5000" (Mw: 5.97 x 10³), "F-1" (Mw: 1.02 x 10⁴), "F-2" (Mw: 1.81 x 10⁴), "F-4" (Mw: 3.97 x 10⁴), "F-10" (Mw: 9.64 x 10⁴), "F-20" (Mw: 1.90 x 10⁵), "F-40" (Mw: 4.27 x 10⁵), "F-80" (Mw: 7.06 x 10⁵) and "F-128" (Mw: 1.09 x 10⁶) all available from Tosoh Corporation, as reference standard samples. The numerical values in the aforementioned parentheses represent molecular weights of the respective reference standard samples.
Measuring Apparatus: "HLC-8220GPC" available from Tosoh Corporation
Analyzing Columns: "GMHXL" + "G3000HXL" both available from Tosoh Corporation.

### [Glass Transition Temperature of Resin]

Using a differential scanning calorimeter "Q-100" available from TA Instruments Japan Inc., a sample was weighed in an amount of 0.01 to 0.02 g in an aluminum pan, heated to 200° C and then cooled from 200° C to 0° C at a temperature drop rate of 10° C/minute. Then, the sample was heated to 150° C at a temperature rise rate of 10° C/minute to prepare an endotherm curve of the sample. The temperature at which an extension of the baseline below the endothermic maximum peak temperature as observed in the thus prepared curve was intersected with a tangential line having a maximum inclination in the region from a rise-up portion to an apex of the peak was read as a glass transition temperature of the sample.

### [Softening Point of Resin]

Using a flow tester "CFT-500D" available from Shimadzu Corporation, 1 g of a sample to be measured was extruded through a nozzle having a die pore diameter of 1 mm and a length of 1 mm while heating the sample at a temperature rise rate of 6° C/minute and applying a load of 1.96 MPa thereto by a plunger. The softening point of the sample was determined as the temperature at which a half amount of the sample was flowed out when plotting a downward movement of the plunger of the flow tester relative to the temperature.

### [Melting Point of Releasing Agent]

Using a differential scanning calorimeter "Q-100" available from TA Instruments Japan Inc., 0.02 g of a sample to be measured was weighed in an aluminum pan, heated to 200° C and then cooled from 200° C to 0° C at a temperature drop rate of 10° C/minute, and then the sample was further heated at a temperature rise rate of 10° C/min to measure an endothermic heat amount thereof. The endothermic maximum peak temperature observed in the thus measured characteristic curve was defined as a melting point of the sample.

### [Volume-Median Particle Size (D₅₀) of Toner Particles]

The volume-median particle size (D₅₀) of the toner particles were measured as follows.
•Measuring Apparatus: "Coulter Multisizer (registered trademark) III" available from Beckman Coulter Inc.
•Aperture Diameter: 50 µm
•Analyzing Software: "Coulter Multisizer (registered trademark) III Ver. 3.51" available from Beckman Coulter Inc.
•Electrolyte Solution: "Isotone (registered trademark) II" available from Beckman Coulter Inc.
•Dispersion Liquid: "EMULGEN (registered trademark) 109P" [polyoxyethylene lauryl ether; HLB (Hydrophile-Lipophile Balance as measured by Griffin method): 13.6] available from Kao Corporation was dissolved in the aforementioned electrolyte solution to thereby prepare a dispersion liquid having a concentration of 5% by mass.
•Dispersing Conditions: Ten milligrams of a sample to be measured were added to 5 mL of the aforementioned dispersion liquid, and the obtained mixture was dispersed using an ultrasonic disperser for 1 minute. Thereafter, 25 mL of the aforementioned electrolyte solution was added to the resulting dispersion, and the obtained mixture was further dispersed using the ultrasonic disperser for 1 minute to thereby prepare a sample dispersion liquid.
•Measuring Conditions: The thus prepared sample dispersion liquid was added to 100 mL of the aforementioned electrolyte solution in a beaker such that a concentration of the resulting dispersion was adjusted to the concentration permitting the measurement for particle sizes of 30000 particles within 20 seconds. And then, the particle sizes of 30000 particles in the dispersion were measured under the aforementioned conditions, and a volume-median particle size (D₅₀) of the particles was determined from the thus measured particle size distribution.

### [Production of Resin (A) and Resin (B)]

Production Examples A1 to A5 and Comparative Production Example A51
(Production of Resins A-1 to A-5 and A-51)

An autoclave equipped with a stainless steel stirring bar was charged with the raw monomer material for a styrene-acrylic resin containing acrylic acid as a bireactive compound as shown in Table 1. The contents of the autoclave were allowed to stand under pressure-applied and heating conditions (at 300° C) for 2 hours to subject the raw monomer material to polymerization reaction. Then, the conditions inside the autoclave were returned to a normal pressure and an ordinary temperature to recover the styrene-acrylic resin precipitated, thereby obtaining styrene-acrylic resins A1 to A5 and A-51.

### Production Example A6 (Production of Resin A-6)

A stainless steel reaction container equipped with a thermometer, a stainless steel stirring bar, a flow-down type condenser with a dehydration tube, and a nitrogen inlet tube was charged with the raw monomer material for a styrene-acrylic resin containing acrylic acid as a bireactive compound and the radical generator as shown in Table 1. The raw monomer material was subjected to polymerization reaction at 150° C for 2 hours. Then, the temperature in the reaction container was returned to an ordinary temperature to recover the styrene-acrylic resin precipitated, thereby obtaining a styrene-acrylic resin A-6.

**TABLE 1**

| | | Production Examples | | | | | | Comparative Production Example |
|---|---|---|---|---|---|---|---|---|
| | | A1 | A2 | A3 | A4 | A5 | A6 | A51 |
| Resins | | A-1 | A-2 | A-3 | A-4 | A-5 | A-6 | A-51 |
| Amount of raw monomer material (a) charged (g) | Styrene | 88 | 64 | 68 | 74 | 81 | 81 | 92 |
| | *α*-Methyl styrene | 5 | 5 | 5 | 0 | 5 | 5 | 5 |
| | Acrylic acid | 7 | 31 | 27 | 26 | 14 | 14 | 3 |
| Radical generator (% by mass)^{*1} | Di- *tert-*butyl peroxide | 0 | 0 | 0 | 0 | 0 | 5 | 0 |
| Properties | Acid value (mgKOH/g) | 53 | 240 | 213 | 200 | 108 | 108 | 23 |
| | Weight-average molecular weight Mw | 8100 | 16500 | 12500 | 13500 | 4600 | 3200 | 11000 |
| | Glass transition temperature (°C) | 50 | 102 | 73 | 60 | 60 | 57 | 52 |
| | Softening point (°C) | 112 | 155 | 143 | 127 | 115 | 100 | 105 |

| | | | | | | | | |
|---|---|---|---|---|---|---|---|---|
| Note *1: Amount (% by mass) of the radical generator on the basis of the whole amount of the raw monomer material (a) | | | | | | | | |

### Production Examples B1 to B4 (Production of Resins B-1 to B-4)

A 10 L four-necked flask equipped with a thermometer, a stainless steel stirring bar, a flow-down type condenser with a dehydration tube, and a nitrogen inlet tube, was charged with the raw monomer material for a polyester resin and the esterification catalyst and the co-catalyst as shown in Table 2. In a nitrogen atmosphere, the contents of the flask were heated to 180° C, and then further heated by 5° C every 1 hour up to 230° C. After confirming that all of the solid monomers were melted and reacted, the pressure inside the flask was reduced to 60 torr to subject the contents of the flask to dehydration condensation reaction for 1 hour. Thereafter, the pressure inside the flask was returned to a normal pressure, and the contents of the flask were cooled to 160° C and then heated to 220° C, and further held at 220° C for 1 hour to allow the contents of the flask to react with each other. Then, the resulting reaction solution was subjected to condensation reaction at 220° C under a pressure of 60 torr until the softening point of the obtained product reached the temperature shown in Table 2, thereby obtaining resins B1 to B4.

**TABLE 2**

| Production Examples | | | B1 | | B2 | | B3 | | B4 | |
|---|---|---|---|---|---|---|---|---|---|---|
| Resins | | | B-1 | | B-2 | | B-3 | | B-4 | |
| Raw monomer material (b) | | | Amount charged (g) | Mole part(s)^{*1} | Amount charged (g) | Mole part(s)^{*1} | Amount charged (g) | Mole part(s)^{*1} | Amount charged (g) | Mole part(s)^{*1} |
| | Alcohol component | BPA-PO^{*3} | 3657 | 50 | 3657 | 50 | - | - | 3680 | 50 |
| | | BPA-EO^{*4} | 3395 | 50 | 3395 | 50 | 7672 | 100 | 3418 | 50 |
| | Carboxylic acid component | Terephthalic acid | 2948 | 85 | 1474 | 40 | - | - | 2095 | 60 |
| | | Isophthalic acid | - | - | 1474 | 40 | - | - | - | - |
| | | Fumaric acid | - | - | - | - | 2328 | 85 | - | - |
| | | Trimellitic acid | - | - | - | - | - | - | 808 | 20 |
| Esterification catalyst | | | Amount charged (g) | Part(s) by mass^{*2} | Amount charged (g) | Part(s) by mass^{*2} | Amount charged (g) | Part(s) by mass^{*2} | Amount charged (g) | Part(s) by mass^{*2} |
| | Tin (II) di(2-ethyl hexanoate) | | 50 | 0.5 | 50 | 0.5 | 50 | 0.5 | 50 | 0.5 |
| Co-catalyst | Gallic acid | | 5 | 0.05 | 5 | 0.05 | 5 | 0.05 | 5 | 0.05 |
| Properties | Softening point (°C) | | 110 | | 103 | | 106 | | 125 | |
| | Glass transition temperature (°C) | | 65 | | 61 | | 58 | | 62 | |
| | Acid value (mgKOH/g) | | 4 | | 5 | | 10 | | 19 | |
| | Hydroxy value (mgKOH/g) | | 42 | | 55 | | 53 | | 44 | |

| | | | | | | | | | | |
|---|---|---|---|---|---|---|---|---|---|---|
| Note: *1: Mole part(s) of respective monomers on the basis of 100 mole parts of an alcohol component in a raw monomer material (b). *2: Part(s) by mass of respective components on the basis of 100 parts by mass of a raw monomer material (b). *3: BPA-PO: Polyoxypropylene (2.2) adduct of bisphenol A. *4: BPA-EO: Polyoxyethylene (2.2) adduct of bisphenol A. | | | | | | | | | | |

### [Production of Binder Resin]

### Examples 1-1 to 1-11 and Comparative Example 1-1 (Production of Binder Resins C-1 to C-11 and C-51)

A 10 L four-necked flask equipped with a thermometer, a stainless steel stirring bar, a flow-down type condenser with a dehydration tube, and a nitrogen inlet tube, was charged with the styrene-acrylic resin (A) and the polyester-based resin (B) compounded in combination with each other at the mixing ratio as shown in Table 3. In a nitrogen atmosphere, the contents of the flask were heated at 180° C for 4 hours to melt and mix the styrene-acrylic resin (A) and the polyester-based resin (B) and subject these resins to condensation reaction. Thereafter, the contents of the flask were further heated to 230° C at which they were reacted with each other for 1 hour, followed by reducing the pressure inside the flask to 60 torr. After confirming that the softening point of the resulting reaction product reached the predetermined temperature as shown in Table 3, the reaction was stopped to form a composite resin, thereby obtaining binder resins C-1 to C-11 and C-51.

**TABLE 3**

| | Kind of binder resin | Mixing ratio | | | | Properties | | |
|---|---|---|---|---|---|---|---|---|
| | | Styrene-acrylic resin (A) | | Polyester-based resin (B) | | Softening point (°C) | Glass transition temperature (°C) | Acid value (mgKOH/g) |
| | | Kind | % by mass | Kind | % by mass | | | |
| Example 1-1 | C-1 | A-1 | 20 | B-1 | 80 | 115 | 62 | 23 |
| Example 1-2 | C-2 | A-2 | 20 | B-1 | 80 | 120 | 72 | 40 |
| Example 1-3 | C-3 | A-3 | 20 | B-1 | 80 | 120 | 68 | 34 |
| Example 1-4 | C-4 | A-4 | 20 | B-1 | 80 | 117 | 65 | 32 |
| Example 1-5 | C-5 | A-5 | 20 | B-1 | 80 | 119 | 65 | 24 |
| Example 1-6 | C-6 | A-1 | 20 | B-2 | 80 | 112 | 58 | 22 |
| Example 1-7 | C-7 | A-1 | 20 | B-3 | 80 | 110 | 53 | 21 |
| Example 1-8 | C-8 | A-1 | 20 | B-4 | 80 | 135 | 58 | 30 |
| Example 1-9 | C-9 | A-1 | 60 | B-1 | 40 | 130 | 53 | 40 |
| Example 1-10 | C-10 | A-1 | 5 | B-1 | 95 | 112 | 62 | 14 |
| Example 1-11 | C-11 | A-6 | 20 | B-1 | 80 | 103 | 61 | 21 |
| Comparative Example 1-1 | C-51 | A-51 | 20 | B-1 | 80 | 105 | 62 | 13 |

### Comparative Example 1-2 (Production of Binder Resin C-52)

A 10 L four-necked flask equipped with a thermometer, a stainless steel stirring bar, a flow-down type condenser with a dehydration tube, and a nitrogen inlet tube, was charged with the raw monomer material for a polyester resin unit except for trimellitic anhydride, acrylic acid as a bireactive compound, and the esterification catalyst and the co-catalyst as shown in Table 4. In a nitrogen atmosphere, the contents of the flask were heated to 160° C, and then a mixed solution containing the raw monomer material for a styrene-acrylic resin unit and a polymerization initiator as shown in Table 4 were added dropwise into the flask over 1 hour. After completion of the dropwise addition, the contents of the flask were heated to 200° C at which they were subjected to aging reaction for 1 hour to produce a styrene-acrylic resin in the reaction system. Then, the contents of the flask were heated to 230° C every 1 hour, and after confirming that all of the solid monomers were melted and reacted, the pressure inside the flask was reduced to 60 torr to subject the contents of the flask to dehydration condensation reaction for 1 hour, followed by adding trimellitic anhydride thereto. The contents of the flask were further continuously subjected to dehydration condensation reaction at 230° C until the softening point of the resulting product reached the temperature as shown in Table 4, thereby obtaining a binder resin C-52.

**TABLE 4**

| Comparative Example | | | 1-2 | |
|---|---|---|---|---|
| Resin | | | C-52 | |
| Raw monomer material (b) | | | Amount charged (g) | Mole part(s)^{*1} |
| | Alcohol component | BPA-PO^{*4} | 2546 | 50 |
| | | BPA-EO^{*5} | 2364 | 50 |
| | Carboxylic acid component | Terephthalic acid | 1449 | 80 |
| | | Trimellitic anhydride | 419 | 15 |
| Bireactive compound | Acrylic acid | | 82 | 8 |
| Raw monomer material (a) | | | Amount charged (g) | Part(s) by mass^{*2} |
| | Styrene | | 1287 | 80 |
| | 2-Ethylhexyl acrylate | | 322 | 20 |
| Polymerization initiator | Di-*tert*-butyl peroxide | | 80 | 5 |
| Esterification catalyst | | | Amount charged (g) | Part(s) by mass^{*3} |
| | Tin (II) di(2-ethyl hexanoate) | | 34 | 0.5 |
| Co-catalyst | Gallic acid | | 3.4 | 0.05 |
| Properties | Softening point (°C) | | 130 | |
| | Glass transition temperature (°C) | | 61 | |
| | Acid value (mgKOH/g) | | 22 | |
| | Crystallinity index | | 2.1 | |

| | | | | |
|---|---|---|---|---|
| Note: *1: Mole part(s) of respective monomers on the basis of 100 mole parts of an alcohol component in a raw monomer material (b). *2: Part(s) by mass of respective monomers on the basis of 100 parts by mass of a raw monomer material (a). *3: Part(s) by mass of respective components on the basis of 100 parts by mass of a raw monomer material (b). *4: BPA-PO: Polyoxypropylene (2.2) adduct of bisphenol A. *5: BPA-EO: Polyoxyethylene (2.2) adduct of bisphenol A. | | | | |

### [Production of Toner]

### Examples 2-1 to 2-11 and Comparative Examples 2-1 and 2-2

One hundred parts by mass of the binder resin as shown in Table 5, 1 part by mass of a charge control agent for negative charging "BONTRON E-81" available from Orient Chemical Industries Co., Ltd., 5 parts by mass of a colorant "Pigment Blue 15:3" available from Dainichiseika Color & Chemicals Mfg. Co., Ltd., and 2 parts by mass of a releasing agent "HNP-9" (paraffin wax; melting point: 80° C) available from Nippon Seiro Co., Ltd., were sufficiently mixed with each other by a Henschel mixer, and then the obtained mixture was melted and kneaded using a co-rotating twin screw extruder having a overall length of a kneading portion of 1560 mm, a screw diameter of 42 mm and a barrel inner diameter of 43 mm at a screw rotating speed of 200 r/min and a barrel preset temperature of 100° C. The feed speed of the mixture was 20 kg/h, and the average residence time of the mixture in the extruder was about 18 seconds. The resulting melt-kneaded material was cooled and coarsely crushed, and then pulverized by a jet mill and classified, thereby obtaining toner particles having a volume median particle size (D₅₀) of 8 µm.

One hundred parts by mass of the thus obtained toner particles were mixed with 2.0 parts by mass of an external additive "AEROSIL R-972" (hydrophobic silica: number-average particle size: 16 nm) available from Nippon Aerosil Co., Ltd., and the resulting mixture was mixed by a Henschel mixer at 3600 r/min for 5 minutes to treat the toner particles with the external additive, thereby obtaining respective toners.

### [Evaluation of Toner]

### [Low-Temperature Fusing Properties and Anti-Hot Offset Properties]

The respective toners were loaded to a modified apparatus of a copying machine "AR-505" available from Sharp Corporation which had been retrofitted such that a fuser therein was capable of conducting toner fusing operation outside of the apparatus, and printing was conducted using the apparatus to obtain a printed material with an unfused image (printed area: 2 cm x 12 cm; amount of toner deposited: 0.5 mg/cm²). Then, using the fuser whose total fusing pressure was adjusted to 40 kgf (fusing speed: 300 mm/second), the printed material with the unfused image was subjected to a fusing test at respective fusing temperatures while raising a temperature of a fusing roller from 80° C to 240° C at intervals of 5° C. A cellophane adhesive tape " UNICEF CELLOPHANE" (width: 18 mm; JIS Z1522) available from Mitsubishi Pencil Co., Ltd., was attached to an image portion of the resulting printed material, and after passing the printed material through the fusing roller adjusted to 30° C, the tape was peeled off from the printed material. Then, optical reflection density values of the fused image before attaching the tape thereto and after peeling off the tape therefrom were measured using a reflection-type densitometer "RD-915" available from GretagMacbeth LLC. From the thus measured values, the minimum fusing temperature of the toner was determined as the temperature of the fusing roller at which a ratio between the optical reflection density values of the fused image (optical reflection density after peeling the tape/optical reflection density before attaching the tape x 100) first exceeded 90%. The lower the minimum fusing temperature became, the more excellent the low-temperature fusing property of the toner was.

In addition, the fused image obtained above was also visually observed to determine whether or not any hot offset of the toner occurred therein. The lowest temperature of the fusing roller at which hot offset of the toner was observed, was defined as a hot offset temperature of the toner. Incidentally, "Copy Bond SF-70NA" (75 g/m²) available from Sharp Corporation was used as a printing paper on which the image to be fused was printed. The higher the hot offset temperature of the toner became, the more excellent the anti-hot offset properties of the toner were.

The results are shown in Table 5.

### [Heat-Resistant Storage Properties]

Five grams of the respective toners were charged into a 50 mL polymer bottle, and allowed to stand under environmental conditions including a temperature of 50° C and a relative humidity of 60% for 48 hours. Thereafter, the respective toners were passed through a sieve having a mesh size of 100 µm to measure an amount of the residual toner on the sieve (plus sieve) and thereby evaluate heat-resistant storage properties of the toner according to the following evaluation ratings. The results are shown in Table 5.

### (Evaluation Ratings)

A: The amount of the residual toner on the sieve was less than 0.5 g;
B: The amount of the residual toner on the sieve was not less than 0.5 g and less than 1 g; and
C: The amount of the residual toner on the sieve was not less than 1 g.

### [Charge Stability]

A 50 mL-capacity polymer bottle was charged with 0.6 g of the respective toners and 19.4 g of a silicone ferrite carrier (average particle size: 90 µm) available from Kanto Denka Kogyo Co., Ltd., at a temperature of 32° C and a relative humidity of 50%, and the contents of the bottle were mixed with each other using a ball mill at 250 r/min to measure a charge amount of the toner using a "Q/M meter" available from Epping GmbH by the following method.

After the elapse of the predetermined mixing time, a given amount of a mixture of the toner and the carrier was charged into a cell attached to the "Q/M meter", and only the toner was sucked through a sieve having a mesh size of 32 µm (stainless steel sieve; twill weave; wire diameter: 0.0035 mm) for 90 seconds. At this time, the change in voltage generated on the carrier was monitored, and the value of X = [total quantity (µC) of electricity after 90 seconds/amount (g) of toner sucked] was defined as a charge amount (µC/g) of the toner. The ratio of a charge amount (X₆₀) of the toner as measured after being mixed for 60 seconds to a charge amount (X₆₀₀) of the toner as measured after being mixed for 600 seconds (X₆₀/X₆₀₀) was calculated to evaluate charge stability of the toner according to the following evaluation ratings. The larger the value of the ratio (X₆₀/X₆₀₀) became, the more excellent the charge stability of the toner was. The results are shown in Table 5.

### (Evaluation Ratings)

A: Ratio (X₆₀/X₆₀₀) was not less than 0.90;
B: Ratio (X₆₀/X₆₀₀) was not less than 0.80 and less than 0.90; and
C: Ratio (X₆₀/X₆₀₀) was less than 0.80.

**TABLE 5**

| | Binder resin | Evaluation | | | |
|---|---|---|---|---|---|
| | Kind | Minimum fusing temperature (°C) | Hot offset temperature (°C) | Heat-resistant storage properties | Charge stability |
| Example 2-1 | C-1 | 150 | 210 | A | A |
| Example 2-2 | C-2 | 160 | 210 | A | A |
| Example 2-3 | C-3 | 155 | 200 | A | A |
| Example 2-4 | C-4 | 155 | 200 | A | A |
| Example 2-5 | C-5 | 155 | 210 | A | A |
| Example 2-6 | C-6 | 155 | 200 | A | A |
| Example 2-7 | C-7 | 150 | 190 | A | B |
| Example 2-8 | C-1/C-8*¹ | 160 | 240 | A | A |
| Example 2-9 | C-9 | 165 | 220 | A | A |
| Example 2-10 | C-10 | 165 | 230 | A | A |
| Example 2-11 | C-11 | 160 | 200 | B | B |
| Comparative Example 2-1 | C-51 | 160 | 175 | B | C |
| Comparative Example 2-2 | C-52 | 160 | 180 | C | D |

| | | | | | |
|---|---|---|---|---|---|
| Note *1: Mixture of binder resins C-1 and C-8 (mixing ratio [C-1/C-8] = 50/50) | | | | | |

As shown in Table 5, it was confirmed that the toners obtained in the Examples using the binder resins respectively containing the specific composite resins had a low minimum fusing temperature and a high hot offset temperature as compared to the toners obtained in the Comparative Examples, and therefore were excellent in not only low-temperature fusing properties and anti-hot offset properties, but also heat-resistant storage properties and charge stability.

## Claims

1. A binder resin for toners, comprising a composite resin that is formed by bonding a styrene-acrylic resin unit and a polyester-based resin unit to each other through a covalent bond, in which:
an acid value of a styrene-acrylic resin (A) constituting the styrene-acrylic resin unit is not less than 40 mgKOH/g.

2. The binder resin for toners according to claim 1, wherein the composite resin is a resin that is obtained by subjecting the styrene-acrylic resin (A) and a polyester-based resin (B) constituting the polyester-based resin unit to a polymer reaction to form the covalent bond therebetween.

3. The binder resin for toners according to claim 2, wherein respective polymerization systems for the styrene-acrylic resin (A) and the polyester-based resin (B) are reaction systems that are independent of each other.

4. The binder resin for toners according to any one of claims 1 to 3, wherein the styrene-acrylic resin (A) is produced by bulk polymerization.

5. The binder resin for toners according to claim 4, wherein a concentration of a radical generator that is used in the bulk polymerization for the styrene-acrylic resin (A) is not more than 1% by mass on the basis of a whole amount of a raw monomer material (a) for the styrene-acrylic resin (A).

6. The binder resin for toners according to claim 4 or 5, wherein the bulk polymerization for the styrene-acrylic resin (A) is conducted in the absence of a solvent.

7. The binder resin for toners according to any one of claims 4 to 6, wherein the bulk polymerization for the styrene-acrylic resin (A) is conducted in the absence of a catalyst.

8. The binder resin for toners according to any one of claims 4 to 7, wherein the bulk polymerization for the styrene-acrylic resin (A) is conducted under the temperature condition of not lower than 160° C.

9. The binder resin for toners according to any one of claims 1 to 8, wherein the styrene-acrylic resin (A) has a glass transition temperature of not lower than 50° C and a softening point of not lower than 105° C.

10. A toner for development of electrostatic images, comprising the binder resin for toners according to any one of claims 1 to 9.

11. A process for producing a binder resin for toners which comprises a composite resin that is formed by bonding a styrene-acrylic resin unit and a polyester-based resin unit to each other through a covalent bond, said process comprising:
Step I: polymerizing a raw monomer material (a) in a polymerization system that is independent of and separate from a polymerization system for a raw monomer material (b) forming a polyester-based resin (B) constituting the polyester-based resin unit, in the absence of the polyester-based resin (B), to obtain a styrene-acrylic resin (A); and
Step II: bonding the styrene-acrylic resin (A) obtained in the step I and the polyester-based resin (B) to each other through a covalent bond to thereby obtain the binder resin for toners which comprises the composite resin,
in which an acid value of the styrene-acrylic resin (A) is not less than 40 mgKOH/g.

12. The process for producing a binder resin for toners, according to claim 11, further comprising the following step I':
Step I': polymerizing the raw monomer material (b) in the polymerization system that is independent of and separate from the polymerization system for the raw monomer material (a) forming the styrene-acrylic resin (A) constituting the styrene-acrylic resin unit, in the absence of the styrene-acrylic resin (A), to obtain the polyester-based resin (B).

13. The process for producing a binder resin for toners, according to claim 12, wherein the step II is the step of bonding the styrene-acrylic resin (A) obtained in the step I and the polyester-based resin (B) obtained in the step I' to each other through the covalent bond formed by the polymer reaction therebetween to thereby obtain the binder resin for toners which comprises the composite resin.

14. The process for producing a binder resin for toners, according to any one of claims 11 to 13, wherein the polymer reaction in the step II is a condensation reaction.

15. The process for producing a binder resin for toners, according to any one of claims 11 to 14, wherein the polymerization of the raw monomer material (a) in the step I is bulk polymerization.
